# EUROPEAN PATENT APPLICATION

(11) **EP 4 132 083 A1**
(43) Date of publication of application: **08.02.2023**
(21) Application number: 21797446.8
(22) Date of filing: 20.04.2021
(51) Int. Cl.: H04W 28/02, H04W 76/12, H04L 1/22

(54) **COMMUNICATION METHOD AND APPARATUS**

(30) Priority: 30.04.2020 CN 202010360380
(71) Applicant: Huawei Technologies Co., Ltd., Shenzhen, Guangdong 518129 (CN)
(72) Inventor: LOU, Chong, Shenzhen, Guangdong 518129 (CN); FAN, Qiang, Shenzhen, Guangdong 518129 (CN); HUANG, Qufang, Shenzhen, Guangdong 518129 (CN)
(74) Representative: Pfenning, Meinig & Partner mbB
(86) International application number: PCT/CN2021/088532
(87) International publication number: WO 2021/218717

(57) **Abstract**

Embodiments of this application provide a communication method and an apparatus. The method includes: A terminal device receives first configuration information and second configuration information from a network device, where the first configuration information is used to configure a primary RLC group, and the second configuration information is used to configure a secondary RLC group. The terminal device determines the primary RLC group and the secondary RLC group based on the first configuration information and the second configuration information. According to the foregoing solution, the network device may configure the primary RLC group and the secondary RLC group for the terminal device, and the primary RLC group and the secondary RLC group each may include at least one RLC entity. Then, the terminal device may make a plurality of duplicates of a to-be-transmitted PDCP data packet at a PDCP layer, and deliver the plurality of duplicates to the RLC entity in the primary RLC group or the secondary RLC group, to meet a high reliability requirement of a service.

## Description

### CROSS-REFERENCE TO RELATED APPLICATIONS

This application claims priority to Chinese Patent Application No. 202010360380.5, filed with the China National Intellectual Property Administration on April 30, 2020 and entitled "COMMUNICATION METHOD AND APPARATUS", which is incorporated herein by reference in its entirety.

### TECHNICAL FIELD

Embodiments of this application relate to the field of communication technologies, and in particular, to a communication method and an apparatus.

### BACKGROUND

A 5th generation (5^{th} generation, 5G) mobile communication system needs to be applied to a new service scenario, for example, an ultra-reliable low-latency communication (ultra-reliable low-latency communication, URLLC) service has extremely high requirements on a transmission latency and transmission reliability of a communication system. For example, for services such as remote industrial control, intelligent transportation systems, and discrete automation, the transmission latency needs to be less than 5 ms, and a transmission error rate needs to be less than 10⁻⁵.

Facing new service requirements, the 3rd generation partnership project (3rd generation partnership project, 3GPP) proposes a packet data convergence protocol (packet data convergence protocol, PDCP) layer data duplication (duplication) transmission solution to meet a high reliability requirement of a service. PDCP layer data duplication transmission usually means that a data packet of a radio bearer is duplicated at a PDCP layer to obtain a plurality of identical data packets, and then the plurality of data packets are respectively delivered to different radio link control (radio link control, RLC) entities to transmit the data packets to a media access control (media access control, MAC) layer through different logical channels.

It can be learned from the foregoing analysis that, in the foregoing PDCP layer data duplication transmission solution, a plurality of RLC entities are required to transmit the duplicated data packets. How to configure a plurality of RLC entities for a terminal device to meet the high reliability requirement of the service is a technical problem to be resolved in this application.

### SUMMARY

Embodiments of this application provide a communication method and an apparatus, to configure a plurality of RLC entities for a terminal device, thereby meeting a high reliability requirement of a service.

According to a first aspect, a communication method is provided. The method is performed by a terminal device. It may be understood that the terminal device may alternatively be a component (a circuit, a chip, or the like) in the terminal device. The method includes: A terminal device receives first configuration information and second configuration information from a network device, where the first configuration information is used to configure a primary RLC group, the second configuration information is used to configure a secondary RLC group, and the primary RLC group and the secondary RLC group each include at least one RLC entity. The terminal device determines the primary RLC group and the secondary RLC group based on the first configuration information and the second configuration information. Optionally, the primary RLC group and the secondary RLC group may be associated with a PDCP entity of a same radio bearer.

According to the foregoing solution, the network device may configure the primary RLC group and the secondary RLC group for the terminal device, and the primary RLC group and the secondary RLC group each may include the at least one RLC entity. Then, the terminal device may make a plurality of duplicates of a to-be-transmitted PDCP data packet at a PDCP layer, and deliver the plurality of duplicates to the RLC entity in the primary RLC group or the secondary RLC group, to meet a high reliability requirement of a service.

Optionally, the first configuration information may further include a first indication information element indicating an RLC entity that belongs to the primary RLC group and that is in an RLC group associated with a PDCP entity. The second configuration information may further include a second indication information element indicating an RLC entity that belongs to the secondary RLC group and that is in the RLC group associated with the PDCP entity. Correspondingly, the terminal device may determine, based on the first indication information element, the RLC entity included in the primary RLC group, and determine, based on the second indication information element, the RLC entity included in the secondary RLC group. Therefore, different RLC entities can be configured for different RLC groups.

In a possible implementation, the first configuration information may include the first indication information element, and the second configuration information no longer includes the second indication information element. The terminal device may determine the RLC entity in the primary RLC group based on the first indication information element. Then, the terminal device may remove, from RLC entities associated with the PDCP layer, the RLC entity that belongs to the primary RLC group, and naturally determine the RLC entity that belongs to the secondary RLC group. Compared with the foregoing solution in which both the RLC entity in the primary RLC group and the RLC entity in the secondary RLC group are indicated, signaling overheads can be reduced. Alternatively, the first configuration information may not include the first indication information element, and the second configuration information includes the second indication information element. Similarly, the terminal device may determine, based on the second indication information element and all RLC entities associated with the PDCP entity, RLC entities included in the primary RLC group and the secondary RLC group. The process is similar to the foregoing process. No additional description is provided. Optionally, the first configuration information includes a third indication information element, and the third indication information element indicates a primary RLC entity in the primary RLC group. The second configuration information includes a fourth indication information element, and the fourth indication information element indicates a primary RLC entity in the secondary RLC group. The primary RLC entity is configured to transmit a PDCP control PDU, for example, a PDCP status report.

Optionally, the first configuration information includes a fifth indication information element, and the fifth indication information element indicates an initial status of the RLC entity that belongs to the primary RLC group and that is in the RLC entities associated with the PDCP entity. The initial status of the RLC entity may specifically include an active state and a deactivated state. The second configuration information includes a sixth indication information element, and the sixth indication information element indicates an initial status of the RLC entity that belongs to the secondary RLC group and that is in the RLC entities associated with the PDCP entity.

According to the foregoing method, the terminal device may configure the initial status for the RLC entities in the primary RLC group and the secondary RLC group. Only an RLC entity in the active state can perform transmission. In addition, the active state and the deactivated state of the RLC entity support subsequent modification, having high flexibility. For example, after configuring the initial status of the RLC entity for the terminal device, the network device may further modify the initial status of the RLC entity in a subsequent process by using RRC signaling or MAC CE signaling.

Optionally, the method in the first aspect further includes: The terminal device determines a first RLC group based on at least one of an activation status of the primary RLC group and an activation status of the secondary RLC group, where the first RLC group is the primary RLC group or the secondary RLC group. The terminal device duplicates a first PDCP data packet based on a quantity of active-state RLC entities in the first RLC group. The terminal device delivers the duplicated first PDCP data packet to the first RLC group. It should be noted that when the at least one RLC entity included in the primary RLC group is in the active state, the primary RLC group is in the active state. When all RLC entities included in the primary RLC group are in the deactivated state, the primary RLC group is in the deactivated state. Similarly, when the at least one RLC entity included in the secondary RLC group is in the active state, the secondary RLC group is in the active state. When all RLC entities included in the secondary RLC group are in the deactivated state, the secondary RLC group is in the deactivated state.

According to the foregoing solution, the terminal device may make a plurality of duplicates of the PDCP data packet at the PDCP layer, and deliver the plurality of duplicates to different RLC entities in the first RLC group, to improve data transmission reliability.

In a possible implementation, that the terminal device determines a first RLC group based on at least one of an activation status of the primary RLC group and an activation status of the secondary RLC group includes: The terminal device determines the first RLC group based on at least one of the activation status of the primary RLC group and the activation status of the secondary RLC group and a size relationship between a data volume of to-be-sent data and a threshold.

For example, the terminal device may determine the size relationship between the data volume of the to-be-sent data and the threshold. When the data volume of the to-be-sent data is greater than or equal to the threshold, a split policy may be started. For example, when both the primary RLC group and the secondary RLC group are in the active state, the to-be-sent data may be delivered to the primary RLC group and the secondary RLC group in this case. Each piece of data is specifically delivered to the primary RLC group or the secondary RLC group depending on a specific split policy. It can be learned that in this case, on a basis that load sharing is implemented, reliability of service data is further improved. Alternatively, if only one of the primary RLC group and the secondary RLC group is in the active state, the to-be-sent data is delivered to only the primary RLC group or the secondary RLC group that is currently in the active state.

When the data volume of the to-be-sent data is less than or equal to the threshold, the PDCP data packet is preferentially delivered to the primary RLC group. The PDCP data packet is delivered to the secondary RLC group only when the primary RLC group is in the inactive state and the secondary RLC group is in the active state.

According to a second aspect, a communication method is provided. For beneficial effects of the second aspect, refer to the first aspect. Details are not described again.

The method in the second aspect is performed by a network device. It may be understood that the network device may alternatively be a component (a circuit, a chip, or the like) in the network device, and the method includes the following steps.

The network device generates first configuration information and second configuration information, where the first configuration information is used to configure a primary RLC group, the second configuration information is used to configure a secondary RLC group, and the primary RLC group and the secondary RLC group each include at least one RLC entity. The network device sends the first configuration information and the second configuration information to a terminal device.

In a possible implementation, the first configuration information includes a first indication information element, and the first indication information element indicates an RLC entity that belongs to the primary RLC group and that is in RLC entities associated with a packet data convergence protocol PDCP entity; and/or the second configuration information includes a second indication information element, and the second indication information element indicates an RLC entity that belongs to the secondary RLC group and that is in the RLC entities associated with the PDCP entity. Optionally, the primary RLC group and the secondary RLC group are associated with a PDCP entity of a same radio bearer.

In a possible implementation, the first configuration information includes a third indication information element, and the third indication information element indicates a primary RLC entity in the primary RLC group; and the second configuration information includes a fourth indication information element, and the fourth indication information element indicates a primary RLC entity in the secondary RLC group.

In a possible implementation, the first configuration information further includes a fifth indication information element, and the fifth indication information element indicates an initial status of the RLC entity that belongs to the primary RLC group and that is in the RLC entities associated with the PDCP entity; and the second configuration information includes a sixth indication information element, and the sixth indication information element indicates an initial status of the RLC entity that belongs to the secondary RLC group and that is in the RLC entities associated with the PDCP entity.

According to a third aspect, a communication method is provided. The method is performed by a terminal device. The terminal device may alternatively be a component (a chip, a circuit, or the like) in the terminal device. The method includes: The terminal device generates a first data packet. The terminal device segments the first data packet into M second data packets, and sends the M second data packets to a network device on an uplink grant resource. Quantities of sending times of the M second data packets are respectively N₁, N₂, ..., and N_{M}, where N₁+N₂...+N_{M}=N, N is a quantity of duplication transmission times of the uplink grant resource, M is greater than or equal to 2, and N is greater than or equal to 1. Optionally, the second data packet may also be referred to as a segment of the first data packet.

In a possible implementation, the terminal device may determine values of N₁, N₂, ..., and N_{M} based on a ratio of N to M. For example, if values of N and M are integers, values of N₁, N₂, ..., and N_{M} are equal, and the values are all N/M. For example, if a value of N is 4, and a value of M is 2, the first data packet may be segmented into two second data packets: a second data packet A and a second data packet B. In addition, a quantity of duplication transmission times of the second data packet A and a quantity of duplication transmission times of the second data packet B are both 2. Alternatively, if values of N and M are non-integers, values of N₁, N₂, ..., and N_{M} are equal, and the values are all (N/M)_{rounded}. The rounding operation may be rounding up, rounding down, or the like. This is not limited. For example, if a value of N is 8, and a value of M is 3, the first data packet may be segmented into three second data packets: a second data packet A, a second data packet B, and a second data packet C. If rounding up is performed, the second data packet A, the second data packet B, and the second data packet C may all be duplicately transmitted for three times. If rounding down is performed, the second data packet A, the second data packet B, and the second data packet C may all be duplicately transmitted twice.

In another possible implementation, the terminal device may determine that quantities of duplication transmission times of the first M-1 second data packets are all (N/M)_{rounded}, where the rounded value may be obtained after rounding up or rounding down, and a quantity of duplication transmission times of the M^{th} second data packet is N-(N/M)_{rounded}×(M-1). For example, if a value of N is 8, and a value of M is 3, the first data packet is segmented into three second data packets: a second data packet A, a second data packet B, and a second data packet C. If rounding up is performed, a quantity of duplication transmission times of the second data packet A and a quantity of duplication transmission times of the second data packet B are both 3, and a quantity of duplication transmission times of a third data packet is 2. If rounding down is performed, a quantity of duplication transmission times of the second data packet A and a quantity of duplication transmission times of the second data packet B are both 2, and a quantity of duplication transmission times of the second data packet C is 4.

In current solutions, only data of same size can be transmitted on a fixed uplink grant transmission resource. Therefore, a large packet needs to be segmented for a plurality of times to complete transmission. However, in the foregoing solution, the large packet can be flexibly segmented on the uplink grant resource, thereby achieving a good compromise between reliability and a latency.

Optionally, each second data packet may further carry first indication information indicating whether a current data packet is newly transmitted or duplicately transmitted. For any second data packet in the M second data packets, it is set that the data packet is transmitted for three times. In this case, it may be considered that the first time of transmission of the second data packet is initial transmission of the second data packet, and remaining two times of transmission are duplication transmission of the second data packet. According to the foregoing method, the network device can better distinguish between a data packet for the initial transmission and a data packet for the duplication transmission.

According to a fourth aspect, a communication method is provided. For beneficial effects of the fourth aspect, refer to the descriptions in the third aspect. The method in the fourth aspect is performed by a network device. The network device may alternatively be a component (for example, a chip or a circuit) in the network device. The method includes: receiving M second data packets from a terminal device on an uplink grant resource, where quantities of sending times of the M second data packets are respectively N₁, N₂, ..., and N_{M}, N₁+N₂...+N_{M}=N, N is a quantity of duplication transmission times of the uplink grant resource, M is greater than or equal to 2, and N is greater than or equal to 1; optionally, the second data packet may also be referred to as a segment of a first data packet; determining the first data packet based on the M second data packets.

In a possible implementation, values of N₁, N₂, ..., and N_{M} are equal, and the values are all (N/M)_{rounded} or (N/M). Alternatively, the terminal device may determine that in N₁, N₂, ..., and N_{M}, quantities of duplication transmission times of the first M-1 second data packets are all (N/M)_{rounded}, where the rounded value may be obtained after rounding up or rounding down, and a quantity of duplication transmission times of the M^{th} second data packet is N-(N/M)_{rounded}×(M-1).

Optionally, each second data packet may further carry first indication information indicating whether a current data packet is newly transmitted or duplicately transmitted.

According to a fifth aspect, an apparatus is provided, including units or means (means) configured to perform steps included in the first aspect, the second aspect, the third aspect, or the fourth aspect.

According to a sixth aspect, an apparatus is provided, including a processor and an interface circuit. The processor is configured to: communicate with another apparatus through the interface circuit, and perform the method provided in the first aspect, the second aspect, the third aspect, or the fourth aspect. There are one or more processors.

According to a seventh aspect, an apparatus is provided, including a processor configured to connect to a memory, and configured to invoke a program stored in the memory to perform the method provided in the first aspect, the second aspect, the third aspect, or the fourth aspect. The memory may be located inside the apparatus, or may be located outside the apparatus. In addition, there are one or more processors.

According to an eighth aspect, an apparatus is provided, including at least one processor and at least one memory, where the at least one processor is configured to perform the method provided in the first aspect, the second aspect, the third aspect, or the fourth aspect.

According to a ninth aspect, a program is provided. When being executed by a processor, the program is used to perform the method provided in the first aspect, the second aspect, the third aspect, or the fourth aspect.

According to a tenth aspect, a program product is provided, for example, a computer-readable storage medium, including the program in the first aspect, the second aspect, the third aspect, or the fourth aspect.

According to an eleventh aspect, a computer-readable storage medium is provided, including a program. When the program is executed by a processor, the method provided in the first aspect, the second aspect, the third aspect, or the fourth aspect is performed.

The apparatus may be a chip. The processor may be implemented by hardware, or may be implemented by software. When implemented by the hardware, the processor may be a logic circuit, an integrated circuit, or the like. When implemented by the software, the processor may be a general-purpose processor. The general-purpose processor is implemented by reading software code stored in the memory. The memory may be integrated into the processor, or may exist independently outside the processor. There are one or more processors, and there are one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

### BRIEF DESCRIPTION OF DRAWINGS

FIG. 1 is a schematic diagram of a PDCP layer duplication solution according to an embodiment of this application;
FIG. 2 is a schematic diagram of a DC split bearer according to an embodiment of this application;
FIG. 3 is a schematic diagram of a duplication transmission manner according to an embodiment of this application;
FIG. 4 is a schematic diagram of a communication system according to an embodiment of this application;
FIG. 5 and FIG. 6 are schematic diagrams of network architectures according to embodiments of this application;
FIG. 7 is a schematic diagram of a communication method according to an embodiment of this application;
FIG. 8 is a schematic diagram of PDCP layer duplication according to an embodiment of this application;
FIG. 9, FIG. 10, FIG. 11, and FIG. 12 are schematic diagrams of communication methods according to embodiments of this application;
FIG. 13 and FIG. 14 are schematic diagrams of duplication transmission according to embodiments of this application; and
FIG. 15 and FIG. 16 are schematic diagrams of communication apparatuses according to embodiments of this application.

### DESCRIPTION OF EMBODIMENTS

The following describes a part of names or terms in embodiments of this application.

### 1. Carrier aggregation (carrier aggregation, CA)

The CA is a technology for aggregating at least two component carriers (component carriers, CCs) together to support higher transmission bandwidth and a high rate. In long term evolution (long term evolution, LTE) and new radio (new radio, NR) communication systems, communication between a terminal device and a network device may be implemented through a plurality of CCs to obtain high bandwidth and a high rate. A cell accessed by the terminal device is a primary cell (primary cell, PCell), a CC corresponding to the primary cell is a primary component carrier (primary component carrier, PCC), a cell configured after the terminal device accesses a network is a secondary cell (secondary cell, SCell), and a CC corresponding to the secondary cell is a secondary component carrier (secondary component carrier, SCC).

### 2. Dual connectivity (dual connectivity, DC)

Bandwidth resources and coverage of a single base station are limited. Therefore, a DC technology is introduced in LTE and NR to provide a performance solution between base stations in a non-ideal transmission condition. In a DC manner, data is segmented and combined at a packet data convergence protocol (packet data convergence protocol, PDCP) layer, and then a user data flow is simultaneously transmitted to a terminal device through a plurality of different base stations to obtain high bandwidth and a high rate. In another DC manner, data may be segmented or combined at another location, for example, on a core network side, and then a user data flow is simultaneously transmitted to a terminal device through a plurality of different base stations. One of the plurality of base stations is a master node (master node, MN), and a remaining base station is a secondary node (secondary node, SN). The MN and the SN may use a same radio access technology or different radio access technologies. This is not limited. For example, the MN may use an LTE standard, and the SN may use an NR standard.

### 3. PDCP layer duplication (duplication) transmission

The PDCP layer duplication transmission may include: A data packet of a radio bearer is duplicated at a PDCP layer to obtain a plurality of identical data packets, and then the plurality of data packets are delivered to different radio link control (radio link control, RLC) layers to transmit the data packets to a media access control (media access control, MAC) layer through different logical channels. The logical channel may be a channel between an RLC layer and a MAC layer.

It should be noted that duplication transmission (duplication transmission) in embodiments of this application is different from retransmission (retransmission). Retransmission usually refers to re-sending a same data packet after the same data packet fails to be sent, or refers to continuously sending a same data packet for a plurality of times. Duplication transmission refers to duplicating one data packet into a plurality of data packets, and respectively transmitting the plurality of data packets to the MAC layers through the corresponding logical channels. "Duplication" in embodiments of this application may also be understood as "replication".

### 4. Association between a logical channel and a cell or association between a logical channel and a carrier

The logical channel (logical channel, LCH) may be a channel between an RLC layer and a MAC layer. If it is indicated in a configuration of the logical channel that a cell or some cells are allowed to be used, it indicates that data transmitted through the logical channel may be transmitted in the cell or these cells, or resources in the cell or these cells may be allocated to the logical channel for use. In this case, it may be considered that the logical channel is associated with the cell or these cells. Further, the data transmitted through the logical channel cannot be transmitted in a cell other than the cell associated with the logical channel. A logical channel corresponding to a data packet duplicated at a PDCP layer and the cell may have an association relationship. In some scenarios, if no cell association relationship is configured, it indicates that the data transmitted through the logical channel can be transmitted in any cell.

For example, a parameter A may be configured for the logical channel, and different cells are indicated by using values of the parameter A, indicating that the data transmitted through the logical channel can be transmitted only in a cell specified by the parameter A. For example, if the parameter A is configured for a logical channel 1, and the parameter A indicates a cell 1 and a cell 2, it indicates that data on the logical channel can be transmitted only in the cell 1 and the cell 2. In this way, the logical channel 1, the cell 1, and the cell 2 may be referred to as having an association relationship, or may be referred to as having a binding relationship or a mapping relationship.

### 5. Dynamic grant (dynamic grant, DG)

When performing the dynamic grant (which is also referred to as dynamic scheduling), a network device indicates, by using downlink control information (downlink control information, DCI), information such as a time-frequency resource location of a scheduled transmission resource to a terminal device. For example, the base station may notify, by using the DCI, the terminal to: receive data (for downlink) in a frequency band of YYY at time of XXX and send data (for uplink) in a frequency band of VVV at time of ZZZ. A resource allocated by the base station through the dynamic scheduling is valid once, that is, a resource allocated by the base station to the terminal through the DG can be used only once.

### 6. Configured grant (configured grant, CG)

The configured grant may also be referred to as static/semi-persistent scheduling. Currently, two types of configured grants are defined: a configured grant type 1 (configured grant type 1) and a configured grant type 2 (configured grant type 2). A difference between the two types lies in that a parameter for the configured grant type 1 is preconfigured by a network device. Therefore, a terminal device directly performs service data transmission by using the parameter configured by the network device, and no additional scheduling information is required. However, when performing service data transmission by using the type 2 uplink configured grant, the terminal device needs to additionally receive one piece of trigger information to perform the service data transmission.

A resource allocated by a base station based on the configured grant is valid for a plurality of times. For example, the base station notifies, by using radio resource control (radio resource control, RRC) signaling, media access control (media access control, MAC) signaling, or physical layer signaling, the terminal to: receive data in a frequency band of YYY at time of XXX and then receive data in the frequency band of YYY at the time of XXX at an interval of a period T, or send data in a frequency band of VVV at time of ZZZ and then send data in the frequency band of VVV at the time of ZZZ at an interval of a period T. It can be learned that the allocated uplink transmission resource or downlink transmission resource is valid for a plurality of times.

For example, the parameter for the configured grant type 1 is configured by using the RRC signaling. After receiving the RRC signaling, the terminal device may perform uplink transmission based on the parameter for the configured grant type 1 by using a resource of the configured grant type 1 when data needs to be transmitted. For another example, a part of parameters for the configured grant type 2 are configured by using the RRC signaling and then activated or deactivated by using DCI. The DCI may include another parameter for the configured grant type 2. After receiving the RRC signaling, when receiving the DCI, the terminal device may perform uplink transmission based on parameters for the configured grant type 2 in the DCI and the RRC signaling by using a resource of the configured grant type 2 when data needs to be transmitted.

In the descriptions of this application, "/" indicates an "or" relationship between associated objects unless otherwise specified. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B each may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

Augmented reality (augmented reality, AR) is a new technology that "seamlessly" integrates real world information and virtual world information. The augmented reality can simulate and superimpose physical information (such as visual information, a sound, taste, and touch) that is originally difficult to experience in the real world within a scope of time and space by using scientific technologies such as computers. In this way, virtual information is applied to the real world and perceived by human senses, achieving sensory experience beyond reality. With the AR technology, a real environment and virtual objects can be superimposed on a same image or space in real time. In this way, the real world information is displayed, and the virtual information is displayed at the same time. The two types of information complement each other and are superimposed on each other.

Virtual reality (virtual reality, VR) is an important direction of a simulation technology and is a collection of the simulation technology, a computer graphics man-machine interface technology, a multimedia technology, a sensing technology, a network technology, and the like. The VR mainly includes a simulated environment, perception, a natural skill, a sensing device, and the like. VR users feel that they are in a virtual reality environment. The higher a resolution of the VR, the more vivid the virtual reality users feel in the virtual reality.

AR and VR services have requirements of a high rate, a low latency, and high reliability. For example, rendering and man-machine interaction game experience services require a maximum end-to-end latency to be 5 ms, a bit error rate for reliability to be 10⁻⁴, and a rate to be 0.1 Gbps to 1 Gbps. For ultra-reliable low-latency (ultra-reliable low-latency, URLLC) services such as the AR and the VR, how to meet requirements of the high rate, the low latency, and the high reliability is a current research hot spot.

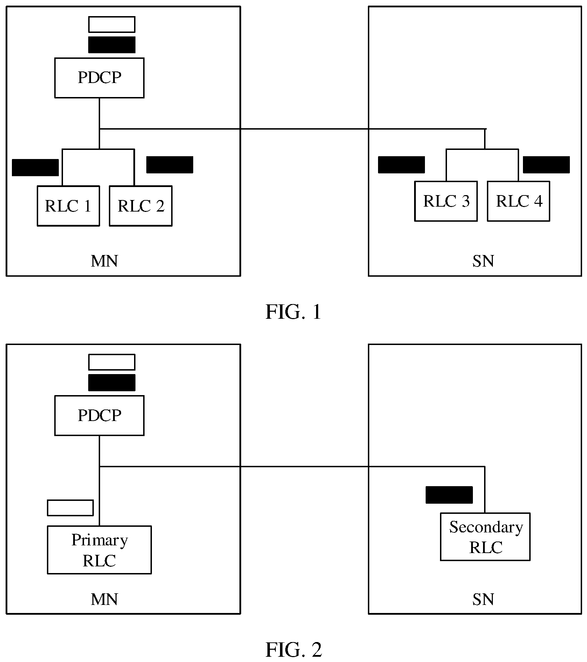

FIG. 1 shows a PDCP layer duplication solution according to an embodiment of this application. In the PDCP layer duplication solution, PDCP layer duplication in a DC and CA (DC-CA) hybrid mode is supported, thereby supporting higher reliability. As shown in FIG. 1, for one data radio bearer (data radio bearer, DRB), four RLC entities may be activated. For example, two RLC entities may be located in a master node MN, and two RLC entities may be located in a secondary node SN. In this way, a PDCP may deliver a PDCP data packet to four activated RLC entities, and perform data transmission through four independent paths, thereby meeting a strict requirement that an error rate is less than 10⁻⁴. In FIG. 1, the PDCP layer duplication in the DC-CA hybrid mode is used as an example for description. In the DC-CA hybrid mode, RLC entities supported by one DRB are located in different base stations, and there are at least two RLC entities in one base station. For PDCP layer duplication in a DC mode, RLC entities supported by one DRB are located in different base stations. For example, two base stations (a master node and a secondary node) each has one RLC entity. For PDCP layer duplication in a CA mode, RLC entities supported by one DRB are located in a same base station.

It can be learned from the foregoing descriptions that in the solution in FIG. 1, the PDCP entity makes four duplicates of the PDCP data packet, and performs the data transmission through the four independent paths. This solution is more suitable for small-packet transmission in an industrial control system. Services such as AR and VR have requirements of a high rate, a low latency, and high reliability. When there are a large quantity of users or a channel condition is poor, if the four RLC entities are used for the data transmission at the same time, a huge challenge is posed for a system capacity, and the high rate and the low latency cannot be met.

FIG. 2 shows a DC split bearer (split bearer) solution according to an embodiment of this application. The solution includes: When a volume of to-be-sent data of a terminal device exceeds a preconfigured threshold, a PDCP entity is allowed to deliver a PDCP data packet to a primary RLC entity or a secondary RLC entity. When a volume of to-be-sent data of UE is less than a threshold, a PDCP entity is allowed to deliver a PDCP data packet only to a primary RLC entity, so that functions of load sharing and resource coordination can be implemented, and a user rate may be improved.

In the foregoing DC split bearer solution, the load sharing can be effectively implemented. However, when a channel condition is poor, reliability of each data packet may not be met. The foregoing solution is more applicable to an enhanced mobile broadband (enhanced mobile broadband, eMBB) service featuring a large data volume and a low reliability requirement. For services such as AR and VR that require a high rate, a low latency, and high reliability, the foregoing solution cannot meet the requirements.

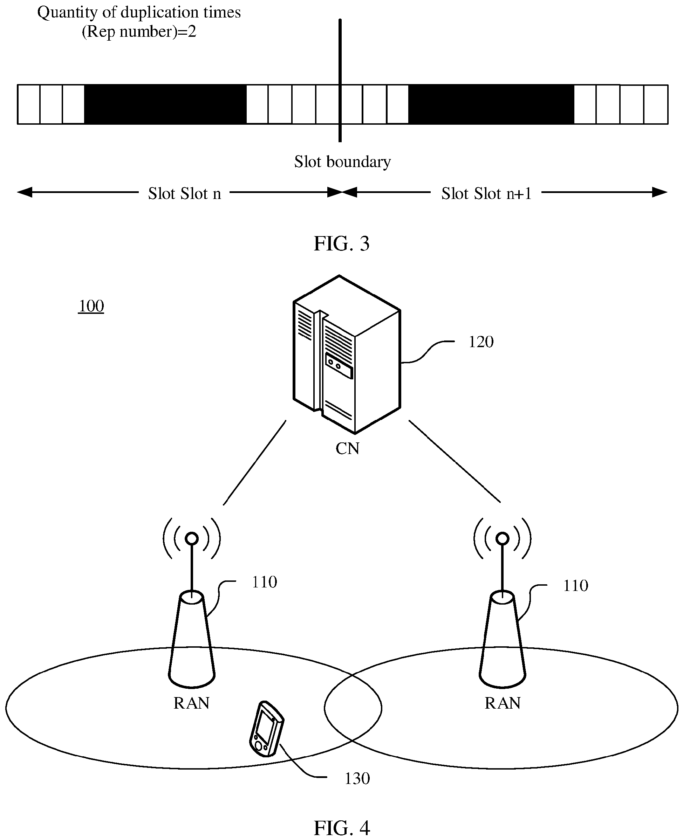

FIG. 3 shows a duplication sending solution according to an embodiment of this application. The solution is mainly used to resolve a problem of single-carrier transmission reliability in a non-CA scenario. A MAC data packet may be duplicately sent for a plurality of times in consecutive slots (slots) by using a CG or DG resource. A quantity of duplication times may be semi-persistently or dynamically indicated by an access network device, or the like. This is not limited. For the MAC data packet, a resource used for duplication sending may be considered as a group or a bundle (bundle) of uplink grants. In FIG. 3, when the quantity of duplication times is configured to 2, UE may duplicately send a same MAC data packet in two consecutive slots, and does not need to wait for a hybrid automatic repeat request (hybrid automatic repeat request, HARQ) feedback of the MAC data packet, and this meets requirements of a low latency and high reliability of a URLLC service.

The foregoing duplication sending solution is mainly applied to a small-packet transmission scenario in an industrial control system. A packet size is usually less than dozens of bytes, and high reliability is implemented by continuously sending a packet for a plurality of times. However, for a high-resolution video stream of a service such as AR or VR, a video encoding packet is large. For CG resource scheduling, a size of an uplink grant resource is fixed. Therefore, for such a large packet, segmentation needs to be performed for a plurality of times. Each segment is sent for a plurality of times on consecutive CG resources. This has a long latency and cannot meet a low latency requirement of the service such as the AR or the VR. For example, for a data packet of the AR service or the VR service, if the data packet needs to be segmented into three segments, and the quantity of duplication times is configured to 4, a total of 3x4=12 slots (slots) are required to complete transmission of the data packet.

FIG. 4 is a schematic diagram of a communication system 100 according to an embodiment of this application. In FIG. 4, a terminal device 130 accesses a wireless network, to obtain a service from an external network (for example, the Internet) over the wireless network or communicate with another terminal device over the wireless network. The wireless network includes a radio access network (radio access network, RAN) 110 and a core network (core network, CN). The RAN 110 is used to connect the terminal device 130 to the wireless network, and a CN 120 is used to manage the terminal device and provide a gateway for communicating with the external network.

The terminal device is also referred to as user equipment (user equipment, UE), a mobile station (mobile station, MS), a mobile terminal device (mobile terminal, MT), or the like, and is a device that provides a user with voice/data connectivity. For example, the terminal device is a handheld device or a vehicle-mounted device that has a wireless connection function. Currently, for example, the terminal device is a mobile phone (mobile phone), a tablet computer, a laptop computer, a palmtop computer, a mobile Internet device (mobile Internet device, MID), a wearable device, a virtual reality (virtual reality, VR) device, an augmented reality (augmented reality, AR) device, a wireless terminal device in industrial control (industrial control), a wireless terminal device in self driving (self driving), a wireless terminal device in remote medical surgery (remote medical surgery), a wireless terminal device in a smart grid (smart grid), a wireless terminal device in transportation safety (transportation safety), a wireless terminal device in a smart city (smart city), or a wireless terminal device in a smart home (smart home).

A network device is a device in the wireless network, such as a radio access network (radio access network, RAN) node through which the terminal device accesses the wireless network. Currently, for example, the RAN node is a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In a network structure, the network device may include a central unit (central unit, CU) node, or a distributed unit (distributed unit, DU) node, or a RAN device including the CU node and the DU node.

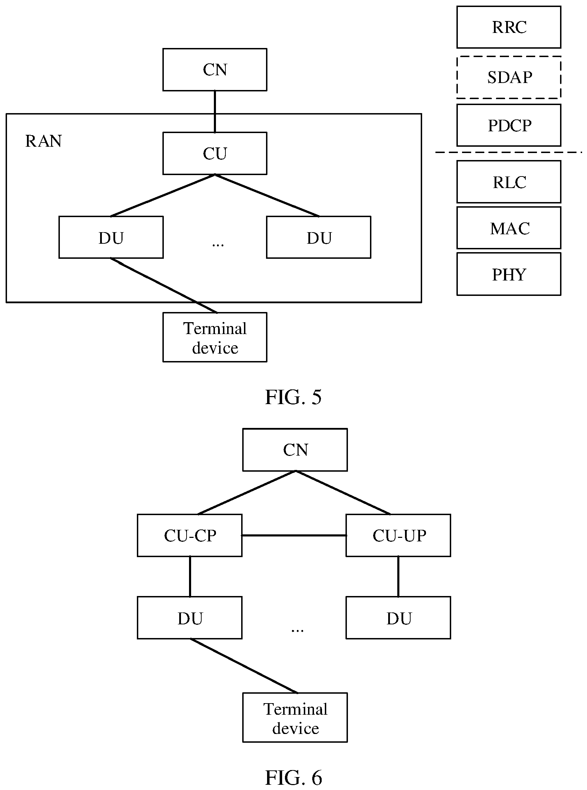

FIG. 5 is a schematic diagram of a network architecture according to an embodiment of this application. In FIG. 5, the network architecture includes a CN device and a RAN device. The RAN device includes a baseband apparatus and a radio frequency apparatus. The baseband apparatus may be implemented by using one node, or may be implemented by using a plurality of nodes. The radio frequency apparatus may be independently implemented remotely from the baseband apparatus, or may be integrated into the baseband apparatus, or a part of the radio frequency apparatus is implemented remotely from the baseband apparatus and a remaining part is integrated into the baseband apparatus. For example, in a long term evolution (Long Term Evolution, LTE) communication system, the RAN device (for example, an eNB) includes the baseband apparatus and the radio frequency apparatus. The radio frequency apparatus may be remotely disposed relative to the baseband apparatus. For example, a remote radio unit (remote radio unit, RRU) is remotely disposed relative to a BBU.

Communication between the RAN device and a terminal device complies with a specified protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. A user plane protocol layer structure may include functions of protocol layers such as the PDCP layer, the RLC layer, the MAC layer, and the PHY layer. In an implementation, a service data adaptation protocol (service data adaptation protocol, SDAP) layer may further be included above the PDCP layer.

The functions of the foregoing protocol layers may be implemented by using one node, or may be implemented by using a plurality of nodes. For example, in an evolved structure, the RAN device may include a central unit (centralized unit, CU) and a distributed unit (distributed unit, DU), and a plurality of DUs may be controlled by one CU in a centralized manner. As shown in FIG. 5, the CU and the DU may be obtained through division based on protocol layers of a wireless network. For example, functions of the PDCP layer and a protocol layer above the PDCP layer are set in the CU, and functions of protocol layers below the PDCP layer, for example, the RLC layer and the MAC layer, are set in the DU.

The foregoing division based on the PDCP layer is merely an example, and division may alternatively be performed based on another protocol layer, for example, the RLC layer. Functions of the RLC layer and a protocol layer above the RLC layer are set in the CU, and a function of a protocol layer below the RLC layer is set in the DU. Alternatively, division is performed at a protocol layer. For example, a part of functions of the RLC layer and a function of a protocol layer above the RLC layer are set in the CU, and a remaining function of the RLC layer and a function of a protocol layer below the RLC layer are set in the DU. In addition, division may alternatively be performed in another manner. For example, division is performed based on a latency. A function whose processing time needs to meet a latency requirement is set in the DU, and a function whose processing time does not need to meet the latency requirement is set in the CU, or the like.

In addition, the radio frequency apparatus may not be disposed in the DU but is remotely disposed from the DU, or may be integrated into the DU, or a part of the radio frequency apparatus is remotely disposed from the DU and a remaining part is integrated into the DU. This is not limited herein.

Compared with the architecture shown in FIG. 5, in FIG. 6, a control plane (control plane, CP) and a user plane (user plane, UP) of a CU may alternatively be separated into different entities for implementation, and the different entities are a control plane CU entity (CU-CP entity) and a user plane CU entity (CU-UP entity).

In the foregoing network architecture, signaling generated by the CU may be sent to a terminal device through a DU, or signaling generated by a terminal device may be sent to the CU through a DU. The DU may transparently transmit the signaling to the terminal device or the CU by directly encapsulating the signaling at a protocol layer without parsing the signaling. In the following embodiments, if transmission of the signaling between the DU and the terminal device is involved, sending or receiving the signaling by the DU is applicable to the scenario. For example, signaling of an RRC layer or a PDCP layer is finally processed as signaling of a PHY layer and sent to the terminal device, or signaling of an RRC layer or a PDCP layer is converted from received signaling of a PHY layer. In this architecture, the signaling of the RRC layer or the PDCP layer may also be considered to be sent by the DU, or sent by the DU and a radio frequency.

In the foregoing embodiment, the CU is classified into a network device on a RAN side. In addition, the CU may alternatively be classified into a network device on a CN side. This is not limited herein. The apparatus in the following embodiments of this application may be located in a terminal device side or a network device side based on a function implemented by the apparatus. When the foregoing CU-DU structure is used for the apparatus, the network device may be a CU node, a DU node, a RAN device including the CU node and the DU node, or the like. This is not limited.

In the following descriptions of embodiments of this application, a "PDCP layer" and a "PDCP entity" are not distinguished. An "RLC layer" and an "RLC entity" are not distinguished, and may be replaced with each other.

Embodiments of this application provide a communication method and an apparatus. The method includes: The PDCP entity splits service data based on a size relationship between a data volume of to-be-sent data and a threshold, to meet high-rate and low-latency requirements of the service data. Further, the PDCP entity further duplicates the service data based on a quantity of active-state RLC entities associated with the PDCP entity, to meet a high reliability requirement of the service data. In conclusion, the communication method and the apparatus provided in embodiments of this application can meet requirements such as the high rate, the low latency, and the high reliability of services such as AR and VR.

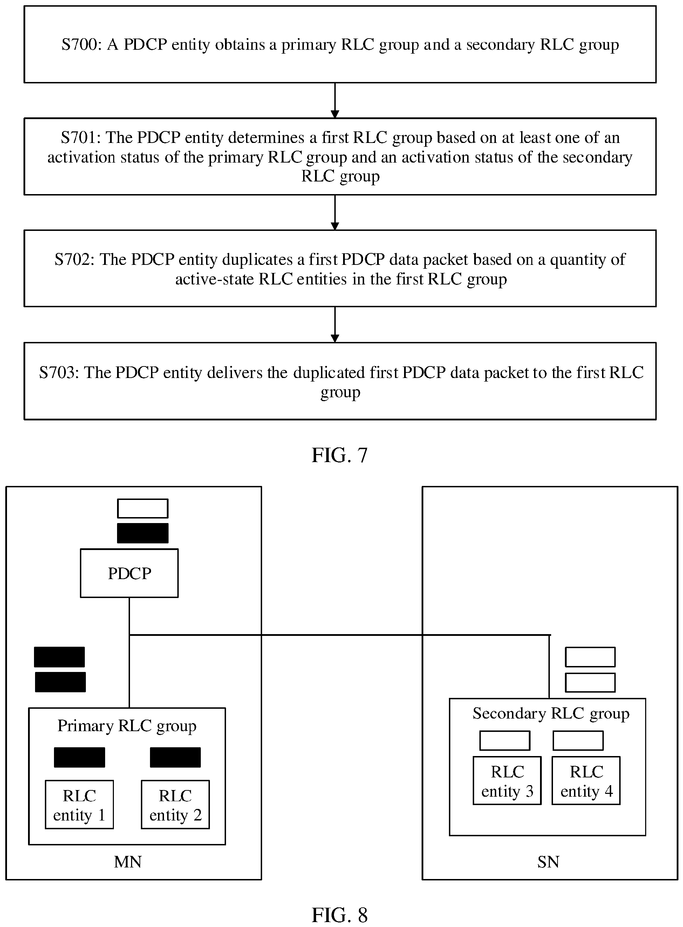

FIG. 7 is a flowchart of a communication method according to an embodiment of this application. A procedure includes the following steps.

Step S700: A PDCP entity obtains a primary RLC group and a secondary RLC group, where the primary RLC group includes at least one RLC entity and the secondary RLC group includes at least one RLC entity. Optionally, the primary RLC group may be replaced with a primary LCH group, the secondary RLC group may be replaced with a secondary LCH group, the primary LCH group may include at least one LCH, and the secondary LCH group may include at least one LCH. It can be learned from the foregoing descriptions of the LCH that the LCH refers to a channel between an RLC entity and a MAC entity. Therefore, one RLC entity corresponds to one LCH, and the RLC entity and the LCH are in a one-to-one correspondence. In the following descriptions, the RLC entity and the LCH are not distinguished, and may be replaced with each other. The RLC entity is used as an example for description. For example, in the following descriptions, the primary RLC group may be replaced with the primary LCH group, and the secondary RLC group may be replaced with the secondary LCH group. A primary RLC entity may be replaced with a primary LCH, or the like.

Step S701: The PDCP entity determines a first RLC group based on at least one of an activation status of the primary RLC group and an activation status of the secondary RLC group, where the first RLC group is the primary RLC group or the secondary RLC group.

It can be learned from the foregoing descriptions that the primary RLC group and the secondary RLC group each may include the at least one RLC entity. The activation status of the primary RLC group includes an active state and a deactivated state. When the at least one RLC entity included in the primary RLC group is in the active state, it may be considered that the primary RLC group is in the active state; otherwise, it is considered that the primary RLC group is in the deactivated state. Similarly, the activation status of the secondary RLC group includes the active state and the deactivated state. When the at least one RLC entity included in the secondary RLC group is in the active state, it may be considered that the secondary RLC group is in the active state; otherwise, it is considered that the secondary RLC group is in the deactivated state. Optionally, the "deactivated state" may also be referred to as an "inactive state". The "deactivated state" and the "inactive state" are not distinguished, and may be replaced with each other.

In this embodiment of this application, in addition to determining the first RLC group based on at least one of the activation status of the primary RLC group and the activation status of the secondary RLC group, the PDCP entity may further determine the first RLC group based on a size relationship between a data volume of to-be-sent data and a threshold. In a possible implementation:

The PDCP entity may first determine the size relationship between the data volume of the to-be-sent data and the threshold. For example, if the data volume of the to-be-sent data is greater than or equal to (or greater than) the threshold, the PDCP entity further determines activation statuses of the primary RLC group and the secondary RLC group. If both the primary RLC group and the secondary RLC group are in the active state, the PDCP entity delivers a to-be-sent data packet to the primary RLC group or the secondary RLC group. The delivery may be performed in a preset manner. For example, the PDCP entity duplicates a PDCP data packet, and delivers a duplicated data packet to the primary RLC group or the secondary RLC group based on a specific ratio. The ratio may be a preset ratio, for example, 1:4. This is merely an example herein, and is not used to limit the ratio. Alternatively, if the data volume of the to-be-sent data is less than (or less than or equal to) the threshold, the PDCP entity may determine the activation status of the primary RLC group. If the primary RLC group is in the active state, a to-be-sent data packet is determined to be delivered to the primary RLC group. In other words, the first RLC group is the primary RLC group. Alternatively, if the primary RLC group is in the deactivated state, the active state of the secondary RLC group is determined. When the secondary RLC group is in the active state, a to-be-sent data packet is determined to be delivered to the secondary RLC group. In other words, the first RLC group is the secondary RLC group. The threshold may be predetermined in a protocol, or may be configured by a network device, for example, configured by using RRC signaling. This is not limited. A value of the threshold may be in a unit of byte, and is set or modified based on a requirement, for example, the value is 50 bytes, 100 bytes, 200 bytes, or the like. Alternatively, the threshold may not be configured, or the threshold is set to 0 or an infinite value. When the threshold is set to the infinite value, it is limited that the secondary RLC group is not used for splitting and only the primary RLC group is used for splitting. For example, if the secondary RLC group is located in a secondary node, and the primary RLC group is located in a master node, the threshold is set to the infinite value, that is, it is limited that only the master node is used for splitting, or it is limited that the secondary node is not used for splitting. When the threshold is set to 0, no limitation is imposed, and splitting is performed based on the active state of the primary RLC group and the active state of the secondary RLC group. When the threshold is not set, by default, only the primary RLC group is used for splitting or splitting is not limited. In this case, an advantage of setting the threshold to 0 or the infinite value lies in that the threshold may be subsequently adjusted based on a requirement. Optionally, the "data volume of the to-be-sent data" may be specifically a sum of a data volume of to-be-sent data in the PDCP entity and a data volume of to-be-sent data that is for initial transmission and that is in an active-state RLC entity associated with the PDCP entity. The to-be-sent data in the PDCP entity includes: a PDCP data protocol data unit (protocol data unit, PDU) that has not been delivered to a lower layer (lower layer, a PDCP control PDU, a PDCP data service data unit (service data unit, SDU) (that is, the PDCP data SDU that has not been assembled into the PDCP data PDU), and the like. Further, the PDCP data PDU may include a PDCP data PDU for initial transmission, for example, the PDCP data PDU that has not been delivered to the lower layer, and/or a PDCP data PDU for duplication transmission. For example, for a DRB in an acknowledged mode (acknowledged mode, AM), the PDCP data PDU used for duplication transmission may be further included. For example, during PDCP data recovery (PDCP data recovery), a PDCP entity at a transmit end may need to duplicately transmit the PDCP data PDU. Further, the PDCP data SDU may include a PDCP data SDU for initial transmission, for example, the PDCP data SDU that has not been assembled into the PDCP data PDU, and/or a PDCP data SDU for duplication transmission. For example, for the DRB in the AM mode, the PDCP data SDU used for duplication transmission and the like may be further included. For example, when the PDCP entity is reestablished, the PDCP entity at the transmit end may need to duplicately transmit the PDCP data SDU.

In this embodiment of this application, it is specified that to-be-sent data at a PDCP layer includes a first PDCP data packet, and the first PDCP data packet may specifically be the PDCP data PDU, the PDCP control PDU, or the PDCP data SDU. Specifically, the PDCP entity may determine, based on the following conditions, to deliver the first PDCP data packet to the primary RLC group or the secondary RLC group.

For example, in a possible implementation, it may be considered that when the following conditions are met, the PDCP entity may determine to deliver the first PDCP data packet to the primary RLC group or the secondary RLC group. Optionally, whether the first PDCP data packet is specifically delivered to the primary RLC group or the secondary RLC group depends on a current split protocol of the PDCP layer.
1. The data volume of the to-be-sent data is greater than or equal to the threshold.
2. The primary RLC is in the active state, and the secondary RLC is in the active state.

Alternatively, in another possible implementation, it may be considered that when the following conditions are met, the PDCP entity determines to deliver the first PDCP data packet to the primary RLC group.
1. The data volume of the to-be-sent data is less than the threshold.
2. The primary RLC group is in the active state.

For example, in still another possible implementation, it may be considered that when the following conditions are met, the PDCP entity may determine to deliver the first PDCP data packet to the secondary RLC group.
1. The data volume of the to-be-sent data is less than the threshold.
2. The primary RLC group is in the deactivated state and the secondary RLC group is in the active state.

Step S702: The PDCP entity duplicates (duplicate) the first PDCP data packet based on a quantity of active-state RLC entities in the first RLC group.

It can be learned from the foregoing descriptions that the first RLC group may be the primary RLC group or the secondary RLC group. The PDCP entity may duplicate the first PDCP data packet based on a quantity of active-state RLC entities in the primary RLC group or the secondary RLC group. Optionally, a quantity of duplicated PDCP data packets may be equal to a quantity of all active-state RLC entities in the primary RLC group or the secondary RLC group. For example, it is assumed that primary RLC entities include an RLC entity 1, an RLC entity 2, and an RLC entity 3. If the RLC entity 1 and the RLC entity 2 are in the active state, and the RLC entity 3 is in the deactivated state, the PDCP entity may make two duplicates of the first PDCP data packet, and in a subsequent step S703, respectively deliver the two duplicates of the PDCP data packet to the RLC entity 1 and the RLC entity 2 in the primary RLC group. Alternatively, a quantity of duplicated PDCP data packets may be less than a quantity of active-state RLC entities in the primary RLC group or the secondary RLC group. For example, when a reliability requirement of a current service is low, and/or a current channel condition is good, the PDCP entity does not need to make too many duplicates of the PDCP data packet, to reduce transmission overheads.

The duplication herein means that a plurality of same data packets are generated, and duplicated data packets include both an original data packet and a data packet that is the same as the original data packet. Therefore, the foregoing step may alternatively be replaced with that the terminal device generates a plurality of same first PDCP data packets based on the quantity of active-state RLC entities in the first RLC group. Then, the plurality of same first PDCP data packets are delivered to the first RLC group, as shown in the following step S703.

Step S703: The PDCP entity delivers the duplicated first PDCP data packet to the first RLC group.

It can be learned from the foregoing descriptions that, in this embodiment of this application, on a basis of splitting the to-be-sent data packet by using the primary RLC group and the secondary RLC group, the to-be-sent data packet may be further duplicated based on the quantity of active-state RLC entities included in the primary RLC group or the secondary RLC group. Therefore, under a condition that a transmission rate and a latency of a service corresponding to the to-be-sent data packet are ensured, service transmission reliability can be further ensured, to meet a requirement of services such as AR and VR.

Optionally, in this embodiment of this application, the PDCP entity may deliver a data packet to the RLC entity in an existing manner. Alternatively, a data packet may be delivered to the RLC entity in the manner described in FIG. 7. In a possible implementation:

The data packet delivery manner corresponding to FIG. 7 may be indicated, by using an RRC message or a system message, to be enabled or disabled by the terminal device. For example, an RRC reconfiguration message may carry a switch information element indicating whether the terminal device enables or disables the foregoing function. Alternatively, the data packet delivery manner corresponding to FIG. 7 may be further set to a capability of the terminal device. For example, a capability indication is carried in capability information of the terminal device, to indicate whether the terminal device enables the data packet delivery manner corresponding to FIG. 7.

In embodiments of this application, the procedure corresponding to FIG. 7 may be applied to a terminal device side, or may be applied to a network device side. When the procedure corresponding to FIG. 7 is applied to the network device side, the primary RLC group and the secondary RLC group may be located in a same network entity or different network entities. For example, in a possible implementation, as shown in FIG. 8, a primary RLC group may be located on a master node MN side, and a secondary RLC group may be located on a secondary node SN side. Still with reference to FIG. 8, the primary RLC group may include an RLC entity 1 and an RLC entity 2, and the secondary RLC group may include an RLC entity 3 and an RLC entity 4. To-be-sent data of a PDCP entity may include a first PDCP data packet (with reference to a black-filled box in FIG. 8) and a second PDCP data packet (with reference to a white-filled box in FIG. 8). The PDCP entity may make two duplicates of the first PDCP data packet, and respectively deliver the two duplicates to the RLC entity 1 and the RLC entity 2 in the primary RLC group. Similarly, the PDCP entity may make two duplicates of the second PDCP data packet, and respectively deliver the two duplicates to the RLC entity 3 and the RLC entity 4 in the secondary RLC group. On a basis that load sharing and effective splitting are implemented, reliability of service data can be further improved.

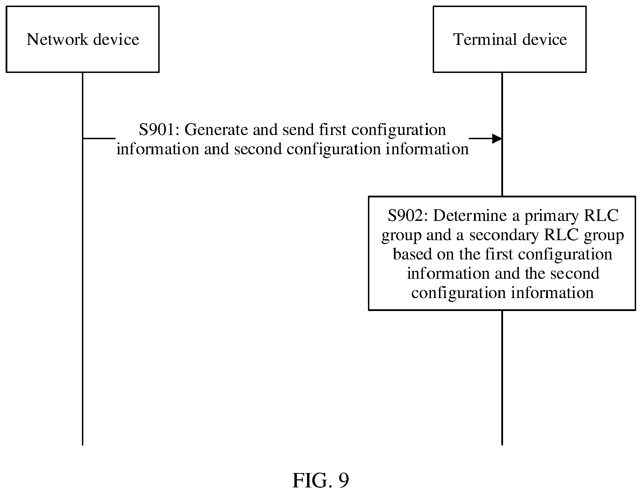

FIG. 9 is a flowchart of a communication method according to an embodiment of this application. The method includes the following steps.

Step S901: A network device generates first configuration information and second configuration information and sends the first configuration information and the second configuration information to a terminal device. The first configuration information is used to configure a primary RLC group, and the second configuration information is used to configure a secondary RLC group. Optionally, the first configuration information and the second configuration information may be configured by using a same message. For example, the message may be RRC reconfiguration, RRC resume (RRC resume), or RRC setup (setup). Alternatively, the first configuration information and the second configuration information may be respectively configured by using different messages. For example, the first configuration information and the second configuration information may be separately configured by using an RRC reconfiguration message. Optionally, the primary RLC group and the secondary RLC group may be associated with a PDCP entity of a same radio bearer.

Step S902: The terminal device determines the primary RLC group and the secondary RLC group based on the first configuration information and the second configuration information. Optionally, the primary RLC group may include at least one RLC entity, and all RLC entities included in the primary RLC group may be located in a same cell group, for example, a master cell group (master cell group, MCG). Similarly, a secondary cell group may include at least one RLC entity, and all RLC entities included in the secondary RLC group may be located in a same cell group, for example, a secondary cell group (secondary cell group, SCG).

Optionally, the first configuration information may include a first indication information element, and the first indication information element indicates an RLC entity that belongs to the primary RLC group and that is in RLC entities associated with a PDCP entity. The second configuration information may include a second indication information element, and the second indication information element indicates an RLC entity that belongs to the secondary RLC group and that is in the RLC entities associated with the PDCP entity. In the following descriptions, the "RLC entities associated with the PDCP" and "RLC entities corresponding to the PDCP entity" are not distinguished, and may be replaced with each other.

In a possible implementation, the first configuration information carries the first indication information element, and the second configuration information does not carry the second indication information element. The terminal device may determine, from the RLC entities associated with the PDCP entity based on the first indication information element, the RLC entity that belongs to the primary RLC group. In the RLC entities associated with the PDCP entity, an RLC entity is either in the primary RLC group or in the secondary RLC group. For example, the RLC entities associated with the PDCP entity include {RLC entity 1, RLC entity 2, RLC entity 3, RLC entity 4}. If the terminal device determines, based on the first indication information element, that the primary RLC group includes {RLC entity 1, RLC entity 2}, the terminal device may naturally determine that the secondary RLC group includes {RLC entity 3, RLC entity 4}. Alternatively, only the second configuration information may carry the second indication information element. After the terminal device determines the secondary RLC group from the RLC entities associated with the PDCP entity, an RLC entity that is not in the secondary RLC group belongs to the primary RLC group. This process is similar to the foregoing process. Details are not described again.

In another possible implementation, the first configuration information carries the first indication information element, and the second configuration information carries the second indication information element. The terminal device may determine, from the RLC entities associated with the PDCP entity based on the first indication information element, the RLC entity included in the primary RLC group. The terminal device may determine, from the RLC entities associated with the PDCP entity based on the second indication information element, the RLC entity included in the secondary RLC group. For example, the foregoing example is still used, and the RLC entities associated with the PDCP entity include {RLC entity 1, RLC entity 2, RLC entity 3, RLC entity 4}. The terminal device may determine, based on the first indication information element, that the primary RLC group includes {RLC entity 1, RLC entity 2}, and determine, based on the second indication information element, that the secondary RLC group includes {RLC entity 3, RLC entity 4}.

Further, optionally, the first configuration information includes a third indication information element, and the third indication information element indicates a primary RLC entity in the primary RLC group. The second configuration information includes a fourth indication information element, and the fourth indication information element indicates a primary RLC entity in the secondary RLC group. The primary RLC entity in the primary RLC group or the secondary RLC group may be used to transmit a PDCP control PDU, for example, a PDCP status report. Optionally, the primary RLC entity in the secondary RLC group may further indicate to deactivate PDCP layer duplication of the radio bearer. To be specific, after other associated RLC entities than the primary RLC entity in the primary RLC group and the primary RLC entity in the secondary RLC group are deactivated, the primary RLC entity in the secondary RLC group and the primary RLC entity in the primary RLC group may be used to send data through a split bearer (split bearer). For details about the split bearer, refer to the descriptions in FIG. 2. Details are not described herein again. The foregoing example is still used. The primary RLC group includes {RLC entity 1, RLC entity 2}, and the RLC entity 1 may be the primary RLC entity. The secondary RLC group includes {RLC entity 3, RLC entity 4}, and the RLC entity 3 may be the primary RLC entity.

Further, the terminal device may further determine an initial status of the RLC entity included in the primary RLC group or the secondary RLC group. The initial status may be an activation status initially configured by the network device for the RLC entity, and the initial status may include an active state, a deactivated state, or the like. Alternatively, the initial status may be an activation status that is of the RLC entity and that is specified in a protocol in an initial phase. Optionally, after the terminal device determines the initial status of the RLC entity, the RLC entity may or may not support subsequent modification of the initial status of the RLC entity. For example, an initial status configured by the network device for the RLC entity 1 is the active state. Subsequently, based on a channel status or a service requirement, the network device may modify an activation status of the RLC entity 1 to the deactivated state or the like by using signaling such as RRC signaling or media access control control element (media access control control element, MAC CE) signaling. The network device may further dynamically activate or deactivate the RLC entity 1 by using the signaling such as the RRC signaling or the MAC CE signaling. For example, when the channel status is poor, the network device may activate the RLC entity 1 by using the MAC CE signaling, that is, modify the activation status of the RLC entity 1 to the active state.

In a possible implementation, the initial status of the RLC entity included in the primary RLC group or the initial status of the RLC entity included in the secondary RLC group may be indicated by an explicit information element. For example, the first configuration information includes a fifth indication information element, and the fifth indication information element indicates the initial status of the RLC entity that belongs to the primary RLC group and that is in the RLC entities associated with the PDCP entity, that is, the initial status of the RLC entity included in the primary RLC group. The second configuration information includes a sixth indication information element, and the sixth indication information element indicates the initial status of the RLC entity that belongs to the secondary RLC group and that is in the RLC entities associated with the PDCP entity, that is, the initial status of the secondary RLC group. Alternatively, in another possible implementation, the initial status of the primary RLC group or the secondary RLC group may be a default status, or may be specified in the protocol, and no additional indication is required. In this case, the terminal device may consider by default that initial statuses of the RLC entities included in the primary RLC group or the secondary RLC group are all the active state. Alternatively, in still another possible implementation, the explicit information element may indicate the initial status of the primary RLC group or the secondary RLC group. If the explicit information element indicates that the initial status of the primary RLC group is the active state, the initial statuses of all the RLC entities included in the primary RLC group are the active state. Alternatively, if the explicit information element indicates that the initial status of the primary RLC group is an inactive state, the initial statuses of all the RLC entities included in the primary RLC group are the inactive state. An indication process of the secondary RLC group is similar to that described above. Details are not described herein again.

In a possible implementation, the network device may configure both the primary RLC group and the secondary RLC group, the primary RLC entity in the primary RLC group, the primary RLC entity in the secondary RLC entity group, and an initial activation status of each RLC entity in the primary RLC group and the secondary RLC group for the terminal device. For example, the primary RLC group configured by the network device for the terminal device includes the RLC entity 1 and the RLC entity 2, and the secondary RLC group includes the RLC entity 3 and the RLC entity 4. The primary RLC entity in the primary RLC group is the RLC entity 1, the primary RLC entity in the secondary RLC group is the RLC entity 3, and the like. Initial statuses of the RLC entity 1 and the RLC entity 2 in the primary RLC group are the active state, an initial status of the RLC entity 3 in the secondary RLC group is the active state, and an initial activation status of the RLC entity 4 is the deactivated state. For example, with reference to the following manner 1, the first configuration information may include the first indication information element, the third indication information element, and the fifth indication information element. The first indication information element is used to configure the primary RLC group, the third indication information element is used to configure the primary RLC entity in the primary RLC group, and the fifth indication information element is used to configure the initial status of each RLC entity in the primary RLC group. The second configuration information in the manner 1 is similar to the foregoing first configuration information. Details are not described again. Alternatively, with reference to the following manner 2, the first configuration information includes the first indication information element, where the first indication information element is used to configure the primary RLC group. The first indication information element may include the fifth indication information element that is used to configure the activation status of each RLC entity in the primary RLC group. Further, the first configuration information further includes the third indication information element that is used to configure the primary RLC entity in the primary RLC group. The second configuration information in the manner 2 is similar to the foregoing first configuration information. Details are not described again.

Alternatively, in another possible implementation, the network device configures only the primary RLC group for the terminal device. The terminal device may determine the secondary RLC group based on all the RLC entities associated with the PDCP and the RLC entities included in the primary RLC group. Further, the network device may further configure, for the terminal device, the primary RLC entities included in the primary RLC group and the secondary RLC group, and the initial status of each RLC entity in the primary RLC group and the secondary RLC group. For example, with reference to the following manner 3, the first configuration information may include the first indication information element, the third indication information element, and the fifth indication information element. The first indication information element is used to configure the primary RLC group, the third indication information element is used to configure the primary RLC entity in the primary RLC group, and the fifth indication information element is used to configure the initial status of the RLC entity in the primary RLC group. The second configuration information includes the fourth indication information element and the sixth indication information element. The fourth indication information element is used to configure the primary RLC entity in the secondary RLC entity group, and the sixth indication information element is used to configure the initial status of the RLC entity in the secondary RLC entity. Alternatively, with reference to the following manner 4, the first configuration information includes the first indication information element that is used to configure the primary RLC group. The first indication information element includes the fifth indication information element that is used to configure the initial status of the RLC entity in the primary RLC group. Further, the first configuration information further includes the third indication information element that is used to configure the primary RLC entity in the primary RLC group. The second configuration information includes the sixth indication information element and the fourth indication information element. The sixth indication information element is used to configure the initial status of the RLC entity in the secondary RLC group, and the fourth indication information element is used to configure the primary RLC entity in the secondary RLC group.

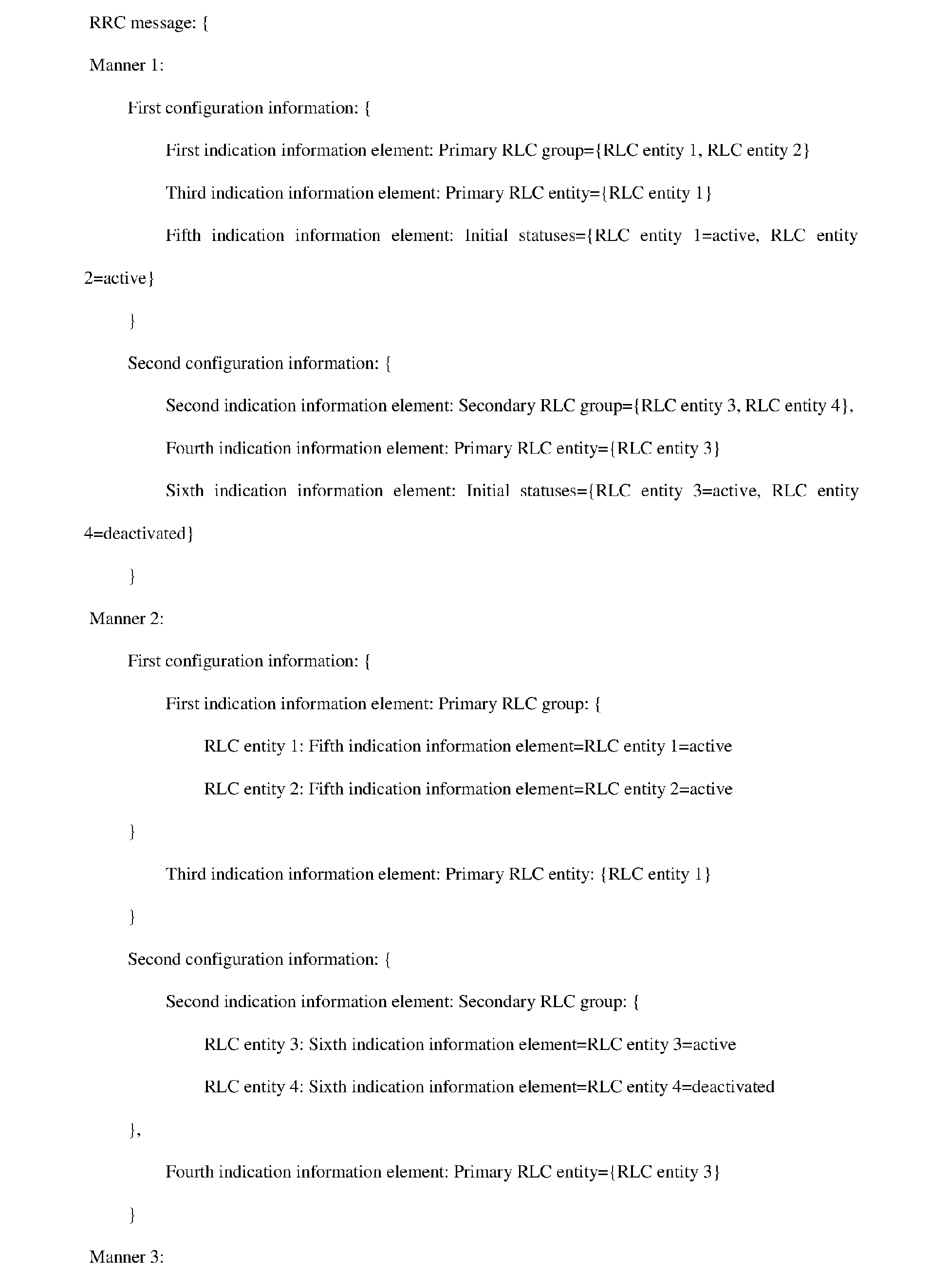

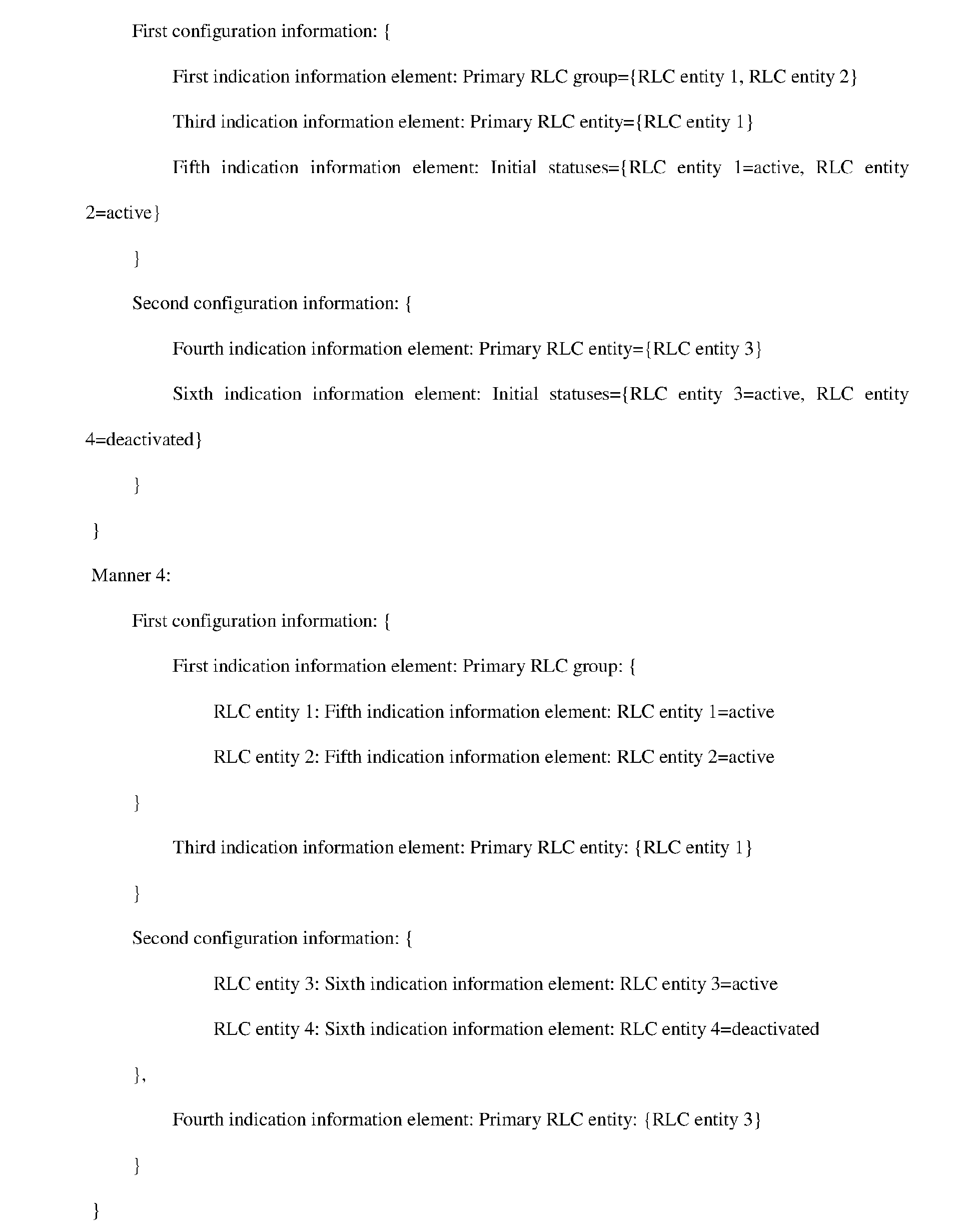

In a possible implementation, it may be configured that an active state of the primary RLC group cannot be deactivated. In other words, once the primary RLC group is configured to be in the active state, the primary RLC group cannot be passively deactivated. Alternatively, an active state of the primary RLC group may be deactivated. For example, the active state of the primary RLC group may be deactivated by using media access control control element (media access control control element, MAC CE) signaling or physical layer signaling.

In another possible implementation, it may be configured that the primary RLC entity in the primary RLC group or the secondary RLC group cannot be deactivated. In other words, once the primary RLC entity is configured to be in the active state, the primary RLC entity cannot be passively deactivated. Alternatively, it may be configured that an active state of the primary RLC entity can be deactivated. For example, the active state of the primary RLC may be deactivated by using MAC CE signaling or physical layer signaling. In this case, if the primary RLC entity is deactivated, a new primary RLC entity is specified in the primary RLC group or the secondary RLC group to transmit the PDCP control PDU. For example, the new RLC entity may be specified by using a predetermined rule. For example, an RLC entity with a lowest LCH identifier or an RLC entity with a highest LCH identifier may be specified as the new primary RLC entity. This is not limited.

According to the foregoing method, two RLC groups may be configured for the terminal device: the primary RLC group and the secondary RLC group. Then, the terminal device may duplicate a PDCP data packet based on a quantity of active-state RLC entities in the primary RLC group or the secondary RLC group, to improve service data reliability.

In embodiments of this application, the procedure shown in FIG. 7 and the procedure shown in FIG. 9 may be used separately or in combination. This is not limited. For example, when the procedure shown in FIG. 7 is used in combination with the procedure shown in FIG. 9, a specific implementation may be as follows: A terminal device receives first configuration information and second configuration information from a network device. The terminal device determines a primary RLC group and a secondary RLC group based on the first configuration information and the second configuration information. The terminal device determines a first RLC group based on at least one of an activation status of the primary RLC group and an activation status of the secondary RLC group, where the first RLC group is the primary RLC group or the secondary RLC group. The terminal device duplicates a first PDCP data packet based on a quantity of active-state RLC entities in the first RLC group. The terminal device delivers the duplicated first PDCP data packet to a first RLC entity.

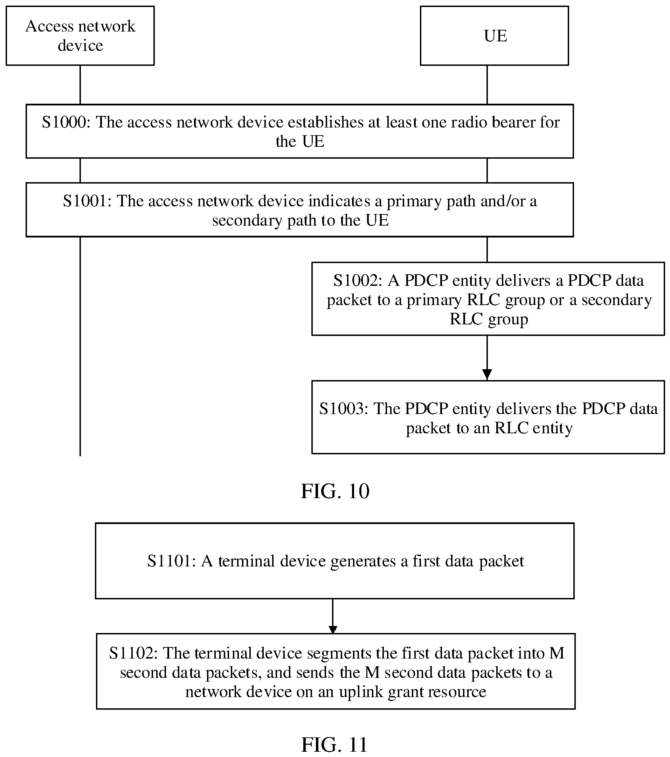

As shown in FIG. 10, a procedure of a communication method is provided. The procedure may specifically be a more specific implementation combining FIG. 7 and FIG. 9. As shown in FIG. 10, the procedure includes the following steps.

Step S 1000: An access network device establishes at least one radio bearer for UE. The radio bearer may specifically be a data radio bearer (data radio bearer, DRB), a signaling radio bearer (signal radio bearer, SRB), or the like.

Configuration information of the radio bearer may be sent to the UE by using an RRC message. The RRC message may be an RRC reconfiguration message, an RRC resume (RRC resume) message, an RRC setup (setup) message, or the like. This is not limited. The configuration information of the radio bearer includes at least one of the following:
1. A radio bearer identifier that is used to identify the radio bearer and that may specifically be a DRB identifier or an SRB identifier.
2. A PDCP configuration that includes the radio bearer or an RLC entity corresponding to the PDCP configuration.

Further, optionally, the RRC message may further include at least one of the following configurations:
1. A cell group configuration (cell group configuration) that includes a radio resource configuration of an MCG or an SCG. One cell group configuration may include configurations of one MAC entity, one or more associated RLC entities, and a primary cell or one or more secondary cells.
2. An RLC bearer configuration (RLC bearer configuration) that is used to configure an RLC entity and an association relationship that is between the RLC entity and a corresponding logical channel and that is between the RLC entity and a PDCP entity.

Step S 1001: The access network device indicates a primary path (primary path) and/or a secondary path (secondary path) to the UE.

Indication information of the primary path and the secondary path may be sent to the UE by using an RRC message. The RRC message may be an RRC reconfiguration message, an RRC resume message, an RRC setup message, or the like. This is not limited. The RRC message may include at least one type of the following configuration information.
1. Configuration information of the primary path, where the primary path may be a primary RLC group or a primary LCH group. The configuration information of the primary path specifically indicates an RLC entity that belongs to the primary RLC group and that is in all RLC entities associated with a PDCP entity. The primary RLC group may include at least one RLC entity. Optionally, the configuration information of the primary path may further include indication information of a primary RLC entity in the primary RLC group.
2. Configuration information of the secondary path, where the secondary path may be a secondary RLC group or a secondary LCH group. The configuration information of the secondary path specifically indicates an RLC entity that belongs to the secondary RLC group and that is in all the RLC entities associated with the PDCP entity. Optionally, the configuration information of the secondary path further includes indication information of a primary RLC entity in the secondary RLC group.

In a possible implementation, the RRC message may carry only the configuration information of the primary path. In this case, an RLC entity that is not the primary path and that is associated with the radio bearer or the PDCP entity configuration is the secondary path. Alternatively, the RRC message may carry only the configuration information of the secondary path. In this case, an RLC entity that is not the secondary path and that is associated with the radio bearer or the PDCP entity configuration is the primary path.

In another possible implementation, the RRC message may carry both the configuration information of the primary path and the configuration information of the secondary path.

Optionally, the RRC message may further include indication information indicating an initial status of an RLC entity corresponding to the PDCP entity, to indicate whether the RLC entity corresponding to the PDCP entity is in an active state. For example, an explicit information element is carried to indicate that the initial status of the RLC entity corresponding to the PDCP entity is the active state (activated). If the information element is not carried, it indicates that the initial status of the RLC entity corresponding to the PDCP entity is a deactivated state (deactivated). In another possible manner, the RRC message may alternatively not include the initial status of the RLC entity corresponding to the PDCP entity. In this case, the UE may consider by default that initial statuses of all the RLC entities associated with the PDCP entity may be the active state. For an initial status of the primary RLC in the primary RLC group or an initial status of the primary RLC in the secondary RLC group, refer to the descriptions in the embodiment shown in FIG. 7. No additional description is provided herein.

Step S 1002: The PDCP entity delivers a PDCP data packet to the primary RLC group or the secondary RLC group. Optionally, the PDCP data packet may be a PDCP PDU, and may include a PDCP data PDU and a PDCP control PDU. Alternatively, the PDCP data packet may be a duplicated PDCP PDU.

Optionally, when at least one of the following conditions is met, the PDCP entity delivers the PDCP data packet to the primary RLC group: A volume of to-be-sent data is less than a threshold; the primary RLC group is in the active state. That the primary RLC group is in the active state means that the at least one RLC entity in the primary RLC group is in the active state. In this case, the secondary RLC group may be in the active state or the deactivated state.

Optionally, when at least one of the following conditions is met, the PDCP entity delivers the PDCP data packet to the secondary RLC group: The volume of the to-be-sent data is less than the threshold; the primary RLC group is in the deactivated state and the secondary RLC group is in the active state. That the primary RLC group is in the deactivated state means that all RLC entities in the primary RLC group are in the deactivated state. That the secondary RLC group is in the active state means that at least one RLC entity in the secondary RLC group is in the active state.

Optionally, when at least one of the following conditions is met, the PDCP entity delivers the PDCP data packet to the primary RLC group or the secondary RLC group: The volume of the to-be-sent data is greater than or equal to the threshold; the primary RLC group is in the active state and the secondary RLC group is in the active state. That the primary RLC group is in the active state means that the at least one RLC entity in the primary RLC group is in the active state. That the secondary RLC group is in the active state means that the at least one RLC entity in the secondary RLC group is in the active state.

Further, the volume of the to-be-sent data includes a sum of a PDCP data volume and an RLC data volume that are used for initial transmission (initial transmission). The PDCP data volume may include the following data volumes: a PDCP data SDU, that is, the PDCP data SDU that has not been assembled into a PDCP data PDU; a PDCP data PDU that has not been delivered to a lower layer; and a PDCP control PDU. Further, the PDCP data PDU may include a PDCP data PDU for initial transmission, for example, the PDCP data PDU that has not been delivered to the lower layer, and/or a PDCP data PDU for duplication transmission. For example, for a DRB in an acknowledged mode (acknowledgement mode, AM) mode, the PDCP data PDU used for duplication transmission may be further included. For example, during PDCP data recovery (PDCP data recovery), a PDCP entity at a transmit end may need to duplicately transmit the PDCP data PDU. Further, the PDCP data SDU may include a PDCP data SDU for initial transmission, for example, the PDCP data SDU that has not been assembled into the PDCP data PDU, and/or a PDCP data SDU for duplication transmission. For example, for the DRB in the AM mode, the PDCP data SDU used for duplication transmission and the like may be further included. For example, when the PDCP entity is reestablished, the PDCP entity at the transmit end may need to duplicately transmit the PDCP data SDU.

Step S1003: The PDCP entity delivers the PDCP data packet to an RLC entity. It can be learned from the descriptions in step S1002 that the PDCP entity may specifically deliver the PDCP data packet to the primary RLC group or the secondary RLC group. In step S1003, the RLC entity to which the PDCP data packet is delivered in the primary RLC group or the secondary RLC group is specifically described. It may be understood that step S1002 and step S1003 may be combined into one step for processing. This is not limited.

Optionally, the RLC entity may include all active-state RLC entities in the primary RLC group or the secondary RLC group. In this case, a quantity of duplicated PDCP data packets is equal to a quantity of active-state RLC entities in the primary RLC group or the secondary RLC group. Alternatively, the RLC entity may include a part of RLC entities in the primary RLC group or the secondary RLC group. In this case, a quantity of duplicated PDCP data packets is less than a quantity of active-state RLC entities in the primary RLC group or the secondary RLC group.

For example, the PDCP entity determines to deliver the PDCP data packet to the primary RLC group. If an RLC entity 1 in the primary RLC group is in the active state, the PDCP entity determines to deliver the PDCP data packet to the RLC entity 1. If the RLC entity 1 and an RLC entity 2 in the primary RLC group are in the active state, the PDCP entity determines to deliver the PDCP data packet to the RLC entity 1 and the RLC entity 2.

Optionally, if the PDCP data packet is the PDCP control PDU, the PDCP entity needs to deliver the PDCP data packet to the primary RLC entity in the primary RLC group or the secondary RLC group.

In this embodiment of this application, load sharing is performed by using the secondary RLC group, to meet a requirement of a high rate of an AR service and a VR service. In addition, the primary RLC group and the secondary RLC group may include a plurality of RLC entities, so that PDCP duplication can be performed on split data streams, and requirements of a low latency and high reliability of the AR service and the VR service can be met.

As shown in FIG. 11, a procedure of a communication method is provided. The procedure includes the following steps.

Step S1101: A terminal device generates a first data packet.

Step S1102: The terminal device segments the first data packet into M second data packets, and sends the M second data packets to a network device on an uplink grant resource. Quantities of sending times of the M second data packets are respectively N₁, N₂, ..., and N_{M}, where N₁+N₂...+N_{M}=N, N is a quantity of duplication transmission times of the uplink grant resource, M is greater than or equal to 2, and N is greater than or equal to 1. Optionally, the second data packet may also be referred to as a segment of the first data packet.

If the uplink grant resource is a CG resource, configuration information of the CG resource may carry an information element indicating the quantity of duplication transmission times. Alternatively, if the uplink grant resource is a dynamic scheduling resource, the quantity of duplication transmission times of the uplink grant resource may be indicated by DCI. For a CG type 2 resource, an initial quantity of duplication transmission times may be configured by using a configuration message of the CG resource, and the quantity of duplication transmission times may be subsequently modified by using DCI. Optionally, the quantity of duplication transmission times in this embodiment of this application includes the first time of transmission.

In a possible implementation, the terminal device may determine values of N₁, N₂, ..., and N_{M} based on a ratio of N to M. For example, if values of N and M are integers, values of N₁, N₂, ..., and N_{M} are equal, and the values are all N/M. For example, if a value of N is 4, and a value of M is 2, the first data packet may be segmented into two second data packets: a second data packet A and a second data packet B. In addition, a quantity of duplication transmission times of the second data packet A and a quantity of duplication transmission times of the second data packet B are both 2. Alternatively, if values of N and M are non-integers, values of N₁, N₂, ..., and N_{M} are equal, and the values are all (N/M)_{rounded}. The rounding operation may be rounding up, rounding down, or the like. This is not limited. For example, if a value of N is 8, and a value of M is 3, the first data packet may be segmented into three second data packets: a second data packet A, a second data packet B, and a second data packet C. If rounding up is performed, the second data packet A, the second data packet B, and the second data packet C may all be duplicately transmitted for three times. If rounding down is performed, the second data packet A, the second data packet B, and the second data packet C may all be duplicately transmitted twice.

In another possible implementation, the terminal device may determine that quantities of duplication transmission times of the first M-1 second data packets are all (N/M)_{rounded}, where the rounded value may be obtained after rounding up or rounding down, and a quantity of duplication transmission times of the M^{th} second data packet is N-(N/M)_{rounded}×(M-1). For example, if a value of N is 8, and a value of M is 3, the first data packet is segmented into three second data packets: a second data packet A, a second data packet B, and a second data packet C. If rounding up is performed, a quantity of duplication transmission times of the second data packet A and a quantity of duplication transmission times of the second data packet B are both 3, and a quantity of duplication transmission times of a third data packet is 2. If rounding down is performed, a quantity of duplication transmission times of the second data packet A and a quantity of duplication transmission times of the second data packet B are both 2, and a quantity of duplication transmission times of the second data packet C is 4.

Optionally, each second data packet may further carry first indication information indicating whether a current data packet is newly transmitted or duplicately transmitted. For any second data packet in the M second data packets, it is set that the data packet is transmitted for three times. In this case, it may be considered that the first time of transmission of the second data packet is initial transmission of the second data packet, and remaining two times of transmission are duplication transmission of the second data packet.

Currently, only same data can be transmitted on a fixed uplink grant transmission resource. Therefore, a large packet needs to be segmented for a plurality of times to complete transmission. However, in this embodiment of this application, the large packet can be flexibly segmented on the uplink grant resource, thereby achieving a good compromise between reliability and a latency.

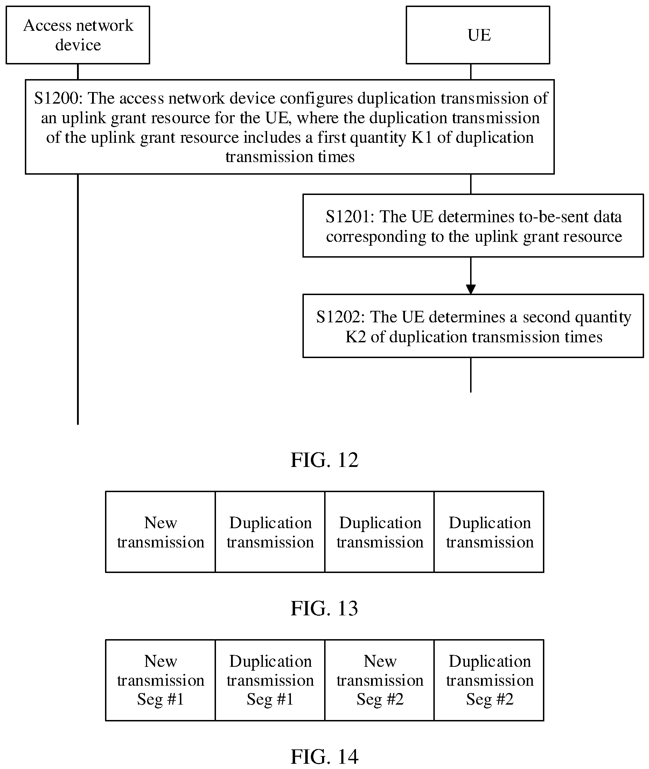

As shown in FIG. 12, a procedure of a communication method is provided. The procedure may specifically be a specific implementation of the procedure shown in FIG. 11. The procedure includes the following steps.

Step S 1200: An access network device configures duplication transmission of an uplink grant resource for UE, where the duplication transmission of the uplink grant resource includes a first quantity K1 of duplication transmission times. The uplink grant resource may be a configured grant CG resource or a dynamic grant DG resource.

The first quantity K1 of duplication transmission times may be configured by using an RRC message. The RRC message may be RRC reconfiguration, RRC resume, RRC setup, or the like. This is not limited. Alternatively, the first quantity K1 of duplication transmission times may be dynamically indicated by using DCI of an uplink grant. If the uplink grant resource is the DG resource, the DCI is used to schedule the DG resource. If the uplink grant resource is the CG resource, the DCI is used to activate or reactivate the CG resource.

Step S1201: The UE determines to-be-sent data corresponding to the uplink grant resource. Optionally, to-be-sent data on an LCH corresponding to an SRB or a DRB may be sent on the uplink grant resource, or a MAC CE may be sent on the uplink grant resource.

In a possible implementation, if the uplink grant is the CG resource, a list of allowed CGs for the LCH may include the CG resource. The list of the allowed CGs for the LCH indicates that the LCH is allowed to be sent on a CG in the list. For example, the list of the allowed CGs is {CG 1, CG 2}, and the CG 1 and the CG 2 may be different CG resources. If the uplink grant is the CG 1 resource, the LCH may be sent on the CG 1 resource. If the uplink grant is a CG 3 resource, the LCH cannot be sent on the CG 3 resource. The list of the allowed CGs for the LCH may be configured by the access network device for the UE by using an RRC message, where the RRC message may be RRC reconfiguration, RRC resume, RRC setup, or the like. This is not limited.

In another possible implementation, if the uplink grant is the DG resource, a list of allowed priorities for the LCH may include a priority corresponding to the DG. The priority may be a priority indicated in the DG, or a priority that is used by the DG and is preconfigured by the RRC. For example, when the priority is 1, it indicates a high-priority service, for example, a URLLC type service, and when the priority is 0, it indicates a low-priority service, for example, an eMBB type service. If the priority is the priority indicated in the DG, the priority may be explicitly indicated by a field in DCI of the DG, or may be implicitly indicated by a special DCI format or a special RNTI.

Step S 1202: The UE determines a second quantity K2 of duplication transmission times.

Optionally, the UE may determine the second quantity of duplication transmission times based on a resource size indicated by the uplink grant and the to-be-sent data. The to-be-sent data may be the to-be-sent data on the LCH corresponding to the SRB or the DRB (for example, may be a PDCP PDU, an RLC SDU of the SRB or the DRB, or an RLC PDU of the SRB or the DRB), or may be the MAC CE, or may be the to-be-sent data on the LCH corresponding to the SRB or the DRB and the MAC CE, or the like.

In a possible implementation, if the to-be-sent data can be sent on the uplink grant resource, the second quantity of duplication transmission times is equal to the first quantity of duplication transmission times. In this case, the to-be-sent data does not need to be segmented into a plurality of data packets for sending.

For example, the to-be-sent data on the LCH corresponding to the SRB or the DRB is assembled to generate a MAC PDU. In addition to the to-be-sent data on the LCH corresponding to the SRB or the DRB, the MAC PDU may further include the MAC CE, for example, a buffer status report (buffer status report, BSR) or a power headroom report (power headroom report, PHR). The UE first performs new transmission of the MAC PDU on a resource corresponding to the uplink grant, then performs duplication transmission of the MAC PDU on a duplication resource corresponding to the uplink grant, and then stops duplication sending of the MAC PDU when a quantity of transmission times reaches the second quantity of duplication transmission times. Redundancy version numbers used for the new transmission and the duplication transmission of the MAC PDU may be configured by the RRC, preset in a protocol, or the like. This is not limited.

As shown in FIG. 13, if the second quantity K2 of duplication transmission times is equal to 4, the UE first performs new transmission on the resource corresponding to the uplink grant, and then performs duplication transmission for three times on the uplink grant resource. Optionally, if the access network device detects that the MAC PDU fails to be sent, the access network device may perform scheduling duplication transmission on a HARQ corresponding to the MAC PDU.

In another possible implementation, if the to-be-sent data cannot be sent on the uplink grant resource, that is, the resource size of the uplink grant cannot accommodate the to-be-sent data, the second quantity of duplication transmission times is less than the first quantity of duplication transmission times.

Optionally, the UE may determine that the to-be-sent data needs to be segmented into N segments. The segment may be a segment of the RLC SDU, a segment of the RLC PDU, a segment of PDCP data, or a segment of the SRB. Optionally, if the segment is the segment of the RLC SDU, an RLC PDU corresponding to the segment may further include segment information. For example, the segment information may indicate whether a current segment is the first segment, the last segment, or the like. Alternatively, if the segment is the segment of the SRB, for example, a segment of an RRC message, an RRC message corresponding to the segment may further include segment information. For example, the segment information indicates whether a current segment is the first segment, or indicates a specific segment number, for example, the first segment or the second segment.

In a possible implementation of segmentation, when assembling the MAC PDU, the UE may obtain a transmission size that is of the to-be-sent data corresponding to the logical channel and that can be used in current transmission of the MAC PDU, to indicate the transmission size to an RLC entity corresponding to the logical channel. The RLC entity determines, based on the transmission size, whether to segment a to-be-sent RLC SDU and how many segments need to be segmented. For example, an RLC SDU #1 corresponding to a logical channel A has 1000 bytes, and a transmission size of the MAC PDU is 500 bytes. In this case, the UE segments the RLC SDU #1 into two RLC SDU segments. A size of a segment #1 of the RLC SDU #1 is 500 bytes, and a size of a segment #2 of the RLC SDU #1 is 500 bytes.

In a possible implementation, the UE determines that the second quantity K2 of duplication transmission times=the first quantity K1 of duplication transmission times/N.

In FIG. 14, if K1=4 and N=2, K2=K1/N=2. Two segments of the to-be-sent data may be a seg #1 and a seg #2. The UE first performs new transmission of the first segment (namely, the seg #1) on the uplink grant, sends duplication transmission of the first segment on the uplink grant resource, sends new transmission of the second segment (namely, the seg #2) on the uplink grant resource, and finally sends duplication transmission of the second segment on the uplink grant resource.

In another possible implementation, the UE determines that a quantity of duplication transmission times of the first N-1 segments is ceil(K1/N), and a quantity of duplication transmission times of the N^{th} segment is K1-ceil(K1/N)x(N-1), where ceil represents a rounding up function. For example, if K1=8 and N=3, the first segment may be transmitted twice, the second segment may be transmitted twice, and the third segment may be transmitted four times.

In still another possible implementation, the UE may determine that a quantity of duplication transmission times of the first N-1 segments is floor(K1/N), and a quantity of duplication transmission times of the N^{th} segment is K1-floor(K1/N)×(N-1), where floor represents a rounding down function. The foregoing example of K1=8 and N=3 is still used. In this case, the first segment may be transmitted three times, the second segment may be transmitted three times, and the third segment may be transmitted twice.

In yet another possible implementation, the UE may determine that a quantity of duplication times of N segments is ceil(K1/N). The foregoing example of K1=8 and N=3 is still used. In this case, the first segment may be transmitted twice, the second segment may be transmitted twice, and the third segment may be transmitted twice.

It can be learned from the foregoing descriptions that a quantity of transmission times of a segment is determined in a plurality of manners. A specific manner used to determine a transmission manner of each segment may be configured for the UE by using an RRC message, preset in the protocol, or the like. This is not limited.

Optionally, each piece of segmented data may further carry a first indication indicating whether data transmitted in a current segment is newly transmitted or duplicately transmitted. The first indication may be physical layer signaling, for example, a demodulation reference signal (demodulation reference signal, DMRS). For example, different DMRSs are allocated to the UE. A DMRS #1 indicates that the transmitted data is duplication transmission of a previous segment, and a DMRS #2 indicates that the transmitted data is new transmission of a next segment. Alternatively, the first indication may be a physical uplink control channel (physical uplink control channel, PUCCH) whose function is similar to that of the foregoing DMRS. Details are not described again. Alternatively, the first indication may be MAC control signaling, RLC control signaling, or PDCP control signaling. For example, the MAC CE indicates that the transmitted data is duplication transmission of a previous segment, or may indicate that the transmitted data is new transmission of a next segment. Alternatively, indication may be performed by carrying or not carrying the MAC CE. For example, if the transmitted data carries the MAC CE, it indicates that the transmitted data is duplication transmission of a previous segment; or if the transmitted data does not carry the MAC CE, it indicates that the transmitted data is new transmission of a next segment.

Optionally, the UE may transmit the to-be-sent data on the uplink grant resource in an existing manner, or may transmit the to-be-sent data in a manner of the procedure in FIG. 12. For example, the UE may indicate, by using an RRC reconfiguration message or a system message, whether the UE currently transmits the to-be-sent data in the manner of the procedure in FIG. 12. For example, the RRC reconfiguration message or the system message may carry a switch information element. When the switch information element is enabled, the UE may transmit the to-be-sent data in the manner of the procedure in FIG. 12. When the switch information element is disabled, the UE may transmit the to-be-sent data in the existing manner. Alternatively, whether the UE supports in transmitting the to-be-sent data in the manner of the procedure in FIG. 12 may be used as a capability of the UE. For example, a capability indication may be carried in capability information of the UE, to indicate whether the UE can support the function.

In this embodiment of this application, the quantity of duplication transmission times of the segment is flexibly determined by comparing the resource size indicated by the uplink grant with a size of the to-be-sent data, so that data of a plurality of segments can be transmitted on a fixed duplication transmission resource, thereby achieving a good compromise between reliability and a latency.

In the foregoing methods provided in embodiments of this application, the methods provided in embodiments of this application are described separately from perspectives of the terminal device and network device interaction. To implement functions in the foregoing methods provided in embodiments of this application, the terminal device and the network device each may include a hardware structure and/or a software unit, and implement the foregoing functions in a form of the hardware structure, the software unit, or a combination of the hardware structure and the software unit. Whether one of the foregoing functions is performed by the hardware structure, the software unit, or the combination of the hardware structure and the software unit depends on particular applications and design constraint conditions of the technical solutions.

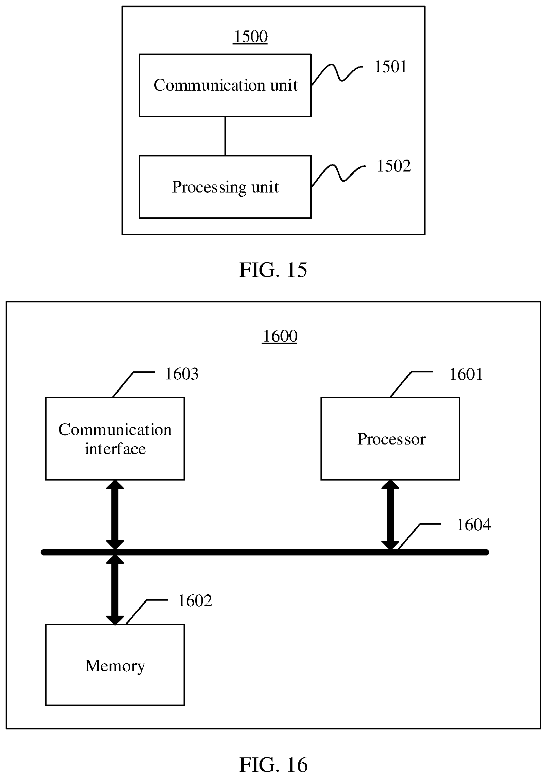

The methods provided in embodiments of this application are described above in detail with reference to FIG. 1 to FIG. 14. Apparatuses provided in embodiments of this application are described below in detail with reference to FIG. 15 and FIG. 16. It should be understood that descriptions of the apparatus embodiments correspond to descriptions of the method embodiments. Therefore, for content that is not described in detail, refer to the descriptions in the foregoing method embodiments.

FIG. 15 is a schematic block diagram of an apparatus 1500 according to an embodiment of this application. The apparatus 1500 is configured to implement functions of the terminal device or the network device in the foregoing methods. For example, the apparatus may be a software unit or a chip system. The chip system may include a chip, or may include a chip and another discrete device. The apparatus includes a communication unit 1501, and may further include a processing unit 1502. The communication unit 1501 may communicate with the outside. The processing unit 1502 is configured to perform processing, for example, determine a primary RLC group and a secondary RLC group based on first configuration information and second configuration information. The communication unit 1501 may also be referred to as a communication interface, a transceiver unit, an input/output interface, or the like. For example, the communication unit 1501 may include a sending unit and/or a receiving unit.

In an example, the apparatus 1500 may implement the steps performed by the terminal device in the procedure shown in FIG. 9. The apparatus 1500 may be the terminal device, or a chip or a circuit configured in the terminal device. The communication unit 1501 performs sending/receiving operations on the terminal device side in the foregoing method embodiments, and the processing unit 1502 is configured to perform processing-related operations on the terminal device side in the foregoing method embodiments.

For example, the communication unit 1501 is configured to receive the first configuration information and the second configuration information from a network device, where the first configuration information is used to configure the primary radio link control RLC group, the second configuration information is used to configure the secondary RLC group, the primary RLC group includes at least one RLC entity, and the secondary RLC group includes at least one RLC entity. The processing unit 1502 is configured to determine the primary RLC group and the secondary RLC group based on the first configuration information and the second configuration information.

Optionally, the first configuration information includes a first indication information element, and the first indication information element indicates an RLC entity that belongs to the primary RLC group and that is in RLC entities associated with a packet data convergence protocol PDCP entity; and the second configuration information includes a second indication information element, and the second indication information element indicates an RLC entity that belongs to the secondary RLC group and that is in the RLC entities associated with the PDCP entity.

Optionally, the primary RLC group and the secondary RLC group are associated with a PDCP entity of a same radio bearer.

Optionally, the first configuration information includes a third indication information element, and the third indication information element indicates a primary RLC entity in the primary RLC group; and the second configuration information includes a fourth indication information element, and the fourth indication information element indicates a primary RLC entity in the secondary RLC group.

Optionally, the first configuration information further includes a fifth indication information element, and the fifth indication information element indicates an initial status of the RLC entity that belongs to the primary RLC group and that is in the RLC entities associated with the PDCP entity; and the second configuration information includes a sixth indication information element, and the sixth indication information element indicates an initial status of the RLC entity that belongs to the secondary RLC group and that is in the RLC entities associated with the PDCP entity.

Optionally, the processing unit 1502 is further configured to: determine a first RLC group based on at least one of an activation status of the primary RLC group and an activation status of the secondary RLC group, where the first RLC group is the primary RLC group or the secondary RLC group; duplicate a first PDCP data packet based on a quantity of active-state RLC entities in the first RLC group; and deliver the duplicated first PDCP data packet to the first RLC group.

Optionally, that the processing unit 1502 determines a first RLC group based on at least one of an activation status of the primary RLC group and an activation status of the secondary RLC group includes: determining the first RLC group based on at least one of the activation status of the primary RLC group and the activation status of the secondary RLC group and a size relationship between a data volume of to-be-sent data and a threshold.

Optionally, that the processing unit 1502 determines the first RLC group based on at least one of the activation status of the primary RLC group and the activation status of the secondary RLC group and a size relationship between a data volume of to-be-sent data and a threshold includes: determining that the data volume of the to-be-sent data is greater than or equal to the threshold; and determining that the first RLC group is the primary RLC group or the secondary RLC group when both the primary RLC group and the secondary RLC group are in an active state;
determining that the first RLC group is the primary RLC group when the primary RLC group is in an active state and the secondary RLC group is in an inactive state; or determining that the first RLC group is the secondary RLC group when the primary RLC group is in an inactive state, and the secondary RLC group is in an active state.

Optionally, that the processing unit 1502 determines the first RLC group based on at least one of the activation status of the primary RLC group and the activation status of the secondary RLC group and a size relationship between a data volume of to-be-sent data and a threshold includes: determining that the data volume of the to-be-sent data is less than or equal to the threshold; and determining that the first RLC group is the primary RLC group when the primary RLC group is in an active state; or determining that the first RLC group is the secondary RLC group when the primary RLC group is in an inactive state, and the secondary RLC group is in an active state.

Optionally, when one RLC entity in the primary RLC group is in the active state, the primary RLC group is in the active state; or when all RLC entities in the primary RLC group are in the inactive state, the primary RLC group is in the inactive state; and when one RLC entity in the secondary RLC group is in the active state, the secondary RLC group is in the active state; or when all RLC entities in the secondary RLC group are in the inactive state, the secondary RLC group is in the inactive state.

In another example, the apparatus 1500 may implement the steps performed by the network device in the procedure shown in FIG. 9. The apparatus 1500 may be the network device, or a chip or a circuit configured in the network device. The communication unit 1501 performs sending/receiving operations on the network device side in the foregoing method embodiments, and the processing unit 1502 is configured to perform processing-related operations on the network device side in the foregoing method embodiments.

For example, the processing unit 1502 is configured to generate first configuration information and second configuration information, where the first configuration information is used to configure a primary radio link control RLC group, the second configuration information is used to configure a secondary RLC group, the primary RLC group includes at least one RLC entity, and the secondary RLC group includes at least one RLC entity. The communication unit 1501 is configured to send the first configuration information and the second configuration information to a terminal device.

Optionally, the first configuration information includes a first indication information element, and the first indication information element indicates an RLC entity that belongs to the primary RLC group and that is in RLC entities associated with a packet data convergence protocol PDCP entity; and the second configuration information includes a second indication information element, and the second indication information element indicates an RLC entity that belongs to the secondary RLC group and that is in the RLC entities associated with the PDCP entity.

Optionally, the primary RLC group and the secondary RLC group are associated with a PDCP entity of a same radio bearer.

Optionally, the first configuration information includes a third indication information element, and the third indication information element indicates a primary RLC entity in the primary RLC group; and the second configuration information includes a fourth indication information element, and the fourth indication information element indicates a primary RLC entity in the secondary RLC group.

Optionally, the first configuration information further includes a fifth indication information element, and the fifth indication information element indicates an initial status of the RLC entity that belongs to the primary RLC group and that is in the RLC entities associated with the PDCP entity; and the second configuration information includes a sixth indication information element, and the sixth indication information element indicates an initial status of the RLC entity that belongs to the secondary RLC group and that is in the RLC entities associated with the PDCP entity.

In an example, the apparatus 1500 may implement the steps performed by the terminal device in the procedure shown in FIG. 11. The apparatus 1500 may be the terminal device, or a chip or a circuit configured in the terminal device. The communication unit 1501 is configured to perform sending/receiving-related operations of the terminal device in the foregoing method embodiments, and the processing unit 1502 is configured to perform processing-related operations of the terminal device in the foregoing method embodiments.

In an example, the processing unit 1502 is configured to generate a first data packet. The processing unit 1502 is further configured to: segment the first data packet into M second data packets, and controls the communication unit 1501 to send the M second data packets to a network device on an uplink grant resource. Quantities of sending times of the M second data packets are respectively N₁, N₂, ..., and N_{M}, where N₁+N₂...+N_{M}=N, N is a quantity of duplication transmission times of the uplink grant resource, M is greater than or equal to 2, and N is greater than or equal to 1.

In a possible implementation, the processing unit 1502 may determine values of N₁, N₂, ..., and N_{M} based on a ratio of N to M. For example, if values of N and M are integers, values of N₁, N₂, ..., and N_{M} are equal, and the values are all N/M. For example, if a value of N is 4, and a value of M is 2, the first data packet may be segmented into two second data packets: a second data packet A and a second data packet B. In addition, a quantity of duplication transmission times of the second data packet A and a quantity of duplication transmission times of the second data packet B are both 2. Alternatively, if values of N and M are non-integers, values of N₁, N₂, ..., and N_{M} are equal, and the values are all (N/M)_{rounded}. The rounding operation may be rounding up, rounding down, or the like. This is not limited. For example, if a value of N is 8, and a value of M is 3, the first data packet may be segmented into three second data packets: a second data packet A, a second data packet B, and a second data packet C. If rounding up is performed, the second data packet A, the second data packet B, and the second data packet C may all be duplicately transmitted for three times. If rounding down is performed, the second data packet A, the second data packet B, and the second data packet C may all be duplicately transmitted twice.

In another possible implementation, the processing unit 1502 may determine that quantities of duplication transmission times of the first M-1 second data packets are all (N/M)_{rounded}, where the rounded value may be obtained after rounding up or rounding down, and a quantity of duplication transmission times of the M^{th} second data packet is N-(N/M)_{rounded}×(M-1). For example, if a value of N is 8, and a value of M is 3, the first data packet is segmented into three second data packets: a second data packet A, a second data packet B, and a second data packet C. If rounding up is performed, a quantity of duplication transmission times of the second data packet A and a quantity of duplication transmission times of the second data packet B are both 3, and a quantity of duplication transmission times of a third data packet is 2. If rounding down is performed, a quantity of duplication transmission times of the second data packet A and a quantity of duplication transmission times of the second data packet B are both 2, and a quantity of duplication transmission times of the second data packet C is 4.

Optionally, each second data packet may further carry first indication information indicating whether a current data packet is newly transmitted or duplicately transmitted. For any second data packet in the M second data packets, it is set that the data packet is transmitted for three times. In this case, it may be considered that the first time of transmission of the second data packet is initial transmission of the second data packet, and remaining two times of transmission are duplication transmission of the second data packet.

In embodiments of this application, division into the units is an example, is merely division into logical functions, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional unit.

It can be understood that in the foregoing embodiment, functions of the communication unit can be implemented by a transceiver, and functions of the processing unit can be implemented by a processor. The transceiver may include a transmitter and/or a receiver, to respectively implement functions of a sending unit and/or a receiving unit. Descriptions are provided below by way of example with reference to FIG. 16.

FIG. 16 is a schematic block diagram of an apparatus 1600 according to an embodiment of this application. The apparatus 1600 shown in FIG. 16 may be an implementation of a hardware circuit of the apparatus shown in FIG. 15. The apparatus may perform functions of the terminal device or the network device in the foregoing method embodiments. For ease of description, FIG. 16 shows only main components of the communication apparatus.

The communication apparatus 1600 shown in FIG. 16 includes at least one processor 1601. The communication apparatus 1600 may further include at least one memory 1602 configured to store program instructions and/or data. The memory 1602 is coupled to the processor 1601. The coupling in this embodiment of this application is an indirect coupling or a communication connection between apparatuses, units, or modules, may be in an electrical form, a mechanical form, or another form, and is used for information exchange between the apparatuses, the units, or the modules. The processor 1601 may cooperate with the memory 1602. The processor 1601 may execute the program instructions stored in the memory 1602, and at least one of the at least one memory 1602 may be included in the processor 1601.

The apparatus 1600 may further include a communication interface 1603. The communication interface 1603 is configured to communicate with another device through a transmission medium, so that the communication apparatus 1600 may communicate with the another device. In this embodiment of this application, the communication interface may be a transceiver, a circuit, a bus, a module, or a communication interface of another type. In this embodiment of this application, when the communication interface is the transceiver, the transceiver may include an independent receiver and an independent transmitter, or may be a transceiver integrated with a transceiver function, or may be an interface circuit.

It should be understood that a connection medium between the processor 1601, the memory 1602, and the communication interface 1603 is not limited in this embodiment of this application. In this embodiment of this application, the memory 1602, the processor 1601, and the communication interface 1603 are connected through a communication bus 1604 in FIG. 16. The bus is represented by a thick line in FIG. 16. A connection manner between other components is merely an example for description, and is not limited. The bus may include an address bus, a data bus, a control bus, and the like. For ease of representation, in FIG. 16, only one thick line is used for representation, but it does not mean that there is only one bus, only one type of bus, or the like.

In an example, the apparatus 1600 is configured to implement the steps performed by the terminal device in the procedure shown in FIG. 9. The communication interface 1603 is configured to perform sending/receiving-related operations on the terminal device side in the foregoing embodiments, and the processor 1601 is configured to perform processing-related operations on the terminal device side in the foregoing method embodiments.

For example, the communication interface 1603 is configured to receive the first configuration information and the second configuration information from a network device, where the first configuration information is used to configure the primary radio link control RLC group, the second configuration information is used to configure the secondary RLC group, the primary RLC group includes at least one RLC entity, and the secondary RLC group includes at least one RLC entity. The processing unit is configured to determine the primary RLC group and the secondary RLC group based on the first configuration information and the second configuration information.

Optionally, the first configuration information includes a first indication information element, and the first indication information element indicates an RLC entity that belongs to the primary RLC group and that is in RLC entities associated with a packet data convergence protocol PDCP entity; and the second configuration information includes a second indication information element, and the second indication information element indicates an RLC entity that belongs to the secondary RLC group and that is in the RLC entities associated with the PDCP entity.

Optionally, the primary RLC group and the secondary RLC group are associated with a PDCP entity of a same radio bearer.

Optionally, the first configuration information includes a third indication information element, and the third indication information element indicates a primary RLC entity in the primary RLC group; and the second configuration information includes a fourth indication information element, and the fourth indication information element indicates a primary RLC entity in the secondary RLC group.

Optionally, the first configuration information further includes a fifth indication information element, and the fifth indication information element indicates an initial status of the RLC entity that belongs to the primary RLC group and that is in the RLC entities associated with the PDCP entity; and the second configuration information includes a sixth indication information element, and the sixth indication information element indicates an initial status of the RLC entity that belongs to the secondary RLC group and that is in the RLC entities associated with the PDCP entity.

Optionally, the processor 1601 is further configured to: determine a first RLC group based on at least one of an activation status of the primary RLC group and an activation status of the secondary RLC group, where the first RLC group is the primary RLC group or the secondary RLC group; duplicate a first PDCP data packet based on a quantity of active-state RLC entities in the first RLC group; and deliver the duplicated first PDCP data packet to the first RLC group.

Optionally, that the processor 1601 determines a first RLC group based on at least one of an activation status of the primary RLC group and an activation status of the secondary RLC group includes: determining the first RLC group based on at least one of the activation status of the primary RLC group and the activation status of the secondary RLC group and a size relationship between a data volume of to-be-sent data and a threshold.

Optionally, that the processor 1601 determines the first RLC group based on at least one of the activation status of the primary RLC group and the activation status of the secondary RLC group and a size relationship between a data volume of to-be-sent data and a threshold includes: determining that the data volume of the to-be-sent data is greater than or equal to the threshold; and determining that the first RLC group is the primary RLC group or the secondary RLC group when both the primary RLC group and the secondary RLC group are in an active state;
determining that the first RLC group is the primary RLC group when the primary RLC group is in an active state and the secondary RLC group is in an inactive state; or determining that the first RLC group is the secondary RLC group when the primary RLC group is in an inactive state, and the secondary RLC group is in an active state.

Optionally, that the processor 1601 determines the first RLC group based on at least one of the activation status of the primary RLC group and the activation status of the secondary RLC group and a size relationship between a data volume of to-be-sent data and a threshold includes: determining that the data volume of the to-be-sent data is less than or equal to the threshold; and determining that the first RLC group is the primary RLC group when the primary RLC group is in an active state; or determining that the first RLC group is the secondary RLC group when the primary RLC group is in an inactive state, and the secondary RLC group is in an active state.

Optionally, when one RLC entity in the primary RLC group is in the active state, the primary RLC group is in the active state; or when all RLC entities in the primary RLC group are in the inactive state, the primary RLC group is in the inactive state; and when one RLC entity in the secondary RLC group is in the active state, the secondary RLC group is in the active state; or when all RLC entities in the secondary RLC group are in the inactive state, the secondary RLC group is in the inactive state.

In an example, the apparatus 1600 is configured to implement the steps performed by the network device in the procedure shown in FIG. 9. The communication interface 1603 is configured to perform sending/receiving-related operations on the network device side in the foregoing embodiments, and the processor 1601 is configured to perform processing-related operations of the network device in the foregoing method embodiments.

For example, the processor 1601 is configured to generate first configuration information and second configuration information, where the first configuration information is used to configure a primary radio link control RLC group, the second configuration information is used to configure a secondary RLC group, the primary RLC group includes at least one RLC entity, and the secondary RLC group includes at least one RLC entity. The communication interface 1603 is configured to send the first configuration information and the second configuration information to a terminal device.

Optionally, the first configuration information includes a first indication information element, and the first indication information element indicates an RLC entity that belongs to the primary RLC group and that is in RLC entities associated with a packet data convergence protocol PDCP entity; and the second configuration information includes a second indication information element, and the second indication information element indicates an RLC entity that belongs to the secondary RLC group and that is in the RLC entities associated with the PDCP entity.

Optionally, the primary RLC group and the secondary RLC group are associated with a PDCP entity of a same radio bearer.

Optionally, the first configuration information includes a third indication information element, and the third indication information element indicates a primary RLC entity in the primary RLC group; and the second configuration information includes a fourth indication information element, and the fourth indication information element indicates a primary RLC entity in the secondary RLC group.

Optionally, the first configuration information further includes a fifth indication information element, and the fifth indication information element indicates an initial status of the RLC entity that belongs to the primary RLC group and that is in the RLC entities associated with the PDCP entity; and the second configuration information includes a sixth indication information element, and the sixth indication information element indicates an initial status of the RLC entity that belongs to the secondary RLC group and that is in the RLC entities associated with the PDCP entity.

In an example, the apparatus 1600 may implement the steps performed by the terminal device in the procedure shown in FIG. 11. The apparatus 1600 may be the terminal device, or a chip or a circuit configured in the terminal device. The communication interface 1603 is configured to perform sending/receiving-related operations of the terminal device in the foregoing method embodiments, and the processor 1601 is configured to perform processing-related operations of the terminal device in the foregoing method embodiments.

In an example, the processor 1601 is configured to generate a first data packet. The processor 1601 is further configured to: segment the first data packet into M second data packets, and control the communication interface 1603 to send the M second data packets to a network device on an uplink grant resource. Quantities of sending times of the M second data packets are respectively N₁, N₂, ..., and N_{M}, where N₁+N₂...+N_{M}=N, N is a quantity of duplication transmission times of the uplink grant resource, M is greater than or equal to 2, and N is greater than or equal to 1.

In a possible implementation, the processor 1601 may determine values of N₁, N₂, ..., and N_{M} based on a ratio of N to M. For example, if values of N and M are integers, values of N₁, N₂, ..., and N_{M} are equal, and the values are all N/M. For example, if a value of N is 4, and a value of M is 2, the first data packet may be segmented into two second data packets: a second data packet A and a second data packet B. In addition, a quantity of duplication transmission times of the second data packet A and a quantity of duplication transmission times of the second data packet B are both 2. Alternatively, if values of N and M are non-integers, values of N₁, N₂, ..., and N_{M} are equal, and the values are all (N/M)_{rounded}. The rounding operation may be rounding up, rounding down, or the like. This is not limited. For example, if a value of N is 8, and a value of M is 3, the first data packet may be segmented into three second data packets: a second data packet A, a second data packet B, and a second data packet C. If rounding up is performed, the second data packet A, the second data packet B, and the second data packet C may all be duplicately transmitted for three times. If rounding down is performed, the second data packet A, the second data packet B, and the second data packet C may all be duplicately transmitted twice.

In another possible implementation, the processor 1601 may determine that quantities of duplication transmission times of the first M-1 second data packets are all (N/M)_{rounded}, where the rounded value may be obtained after rounding up or rounding down, and a quantity of duplication transmission times of the M^{th} second data packet is N-(N/M)_{rounded}×(M-1). For example, if a value of N is 8, and a value of M is 3, the first data packet is segmented into three second data packets: a second data packet A, a second data packet B, and a second data packet C. If rounding up is performed, a quantity of duplication transmission times of the second data packet A and a quantity of duplication transmission times of the second data packet B are both 3, and a quantity of duplication transmission times of a third data packet is 2. If rounding down is performed, a quantity of duplication transmission times of the second data packet A and a quantity of duplication transmission times of the second data packet B are both 2, and a quantity of duplication transmission times of the second data packet C is 4.

Optionally, each second data packet may further carry first indication information indicating whether a current data packet is newly transmitted or duplicately transmitted. For any second data packet in the M second data packets, it is set that the data packet is transmitted for three times. In this case, it may be considered that the first time of transmission of the second data packet is initial transmission of the second data packet, and remaining two times of transmission are duplication transmission of the second data packet.

Further, an embodiment of this application further provides an apparatus. The apparatus is configured to perform the method in the procedure shown in FIG. 9, or is configured to perform the method in the procedure shown in FIG. 11. A computer-readable storage medium includes a program. When the program is executed by a processor, the method in the procedure shown in FIG. 9 is performed, or the method in the procedure shown in FIG. 11 is performed. A computer program product includes computer program code. When the computer program code is run on a computer, the computer is enabled to implement the method in the procedure shown in FIG. 9 or the method in the procedure shown in FIG. 11. A chip includes: a processor, where the processor is coupled to a memory, and the memory is configured to store a program or instructions. When the program or the instructions are executed by the processor, the apparatus is enabled to perform the method in the procedure shown in FIG. 9 or perform the method in the procedure shown in FIG. 11.

In embodiments of this application, the processor may be a general-purpose processor, a digital signal processor, an application-specific integrated circuit, a field programmable gate array or another programmable logic device, a discrete gate or transistor logic device, or a discrete hardware component. The processor can implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can be used to carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

The methods in embodiments of this application may be all or partially implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
receiving, by a terminal device, first configuration information and second configuration information from a network device, wherein the first configuration information is used to configure a primary radio link control RLC group, the second configuration information is used to configure a secondary RLC group, the primary RLC group comprises at least one RLC entity, and the secondary RLC group comprises at least one RLC entity; and
determining, by the terminal device, the primary RLC group and the secondary RLC group based on the first configuration information and the second configuration information.

2. The method according to claim 1, wherein the first configuration information comprises a first indication information element, and the first indication information element indicates an RLC entity that belongs to the primary RLC group and that is in RLC entities associated with a packet data convergence protocol PDCP entity; and the second configuration information comprises a second indication information element, and the second indication information element indicates an RLC entity that belongs to the secondary RLC group and that is in the RLC entities associated with the PDCP entity.

3. The method according to claim 1 or 2, wherein the primary RLC group and the secondary RLC group are associated with a PDCP entity of a same radio bearer.

4. The method according to any one of claims 1 to 3, wherein the first configuration information comprises a third indication information element, and the third indication information element indicates a primary RLC entity in the primary RLC group; and the second configuration information comprises a fourth indication information element, and the fourth indication information element indicates a primary RLC entity in the secondary RLC group.

5. The method according to any one of claims 1 to 4, wherein the first configuration information further comprises a fifth indication information element, and the fifth indication information element indicates an initial status of the RLC entity that belongs to the primary RLC group and that is in the RLC entities associated with the PDCP entity; and the second configuration information comprises a sixth indication information element, and the sixth indication information element indicates an initial status of the RLC entity that belongs to the secondary RLC group and that is in the RLC entities associated with the PDCP entity.

6. The method according to any one of claims 1 to 5, further comprising:
determining, by the terminal device, a first RLC group based on at least one of an activation status of the primary RLC group or an activation status of the secondary RLC group, wherein the first RLC group is the primary RLC group or the secondary RLC group;
duplicating, by the terminal device, a first PDCP data packet based on a quantity of active-state RLC entities in the first RLC group; and
delivering, by the terminal device, the duplicated first PDCP data packet to the first RLC group.

7. The method according to claim 6, wherein the determining, by the terminal device, a first RLC group based on at least one of an activation status of the primary RLC group and an activation status of the secondary RLC group comprises:
determining, by the terminal device, the first RLC group based on at least one of the activation status of the primary RLC group and the activation status of the secondary RLC group and a size relationship between a data volume of to-be-sent data and a threshold.

8. The method according to claim 7, wherein the determining, by the terminal device, the first RLC group based on at least one of the activation status of the primary RLC group and the activation status of the secondary RLC group and a size relationship between a data volume of to-be-sent data and a threshold comprises:
determining, by the terminal device, that the data volume of the to-be-sent data is greater than or equal to the threshold; and
determining, by the terminal device, that the first RLC group is the primary RLC group or the secondary RLC group when both the primary RLC group and the secondary RLC group are in an active state;
determining, by the terminal device, that the first RLC group is the primary RLC group when the primary RLC group is in an active state and the secondary RLC group is in an inactive state; or
determining, by the terminal device, that the first RLC group is the secondary RLC group when the primary RLC group is in an inactive state, and the secondary RLC group is in an active state.

9. The method according to claim 7, wherein the determining, by the terminal device, the first RLC group based on at least one of the activation status of the primary RLC group and the activation status of the secondary RLC group and a size relationship between a data volume of to-be-sent data and a threshold comprises:
determining, by the terminal device, that the data volume of the to-be-sent data is less than or equal to the threshold; and
determining, by the terminal device, that the first RLC group is the primary RLC group when the primary RLC group is in an active state; or
determining, by the terminal device, that the first RLC group is the secondary RLC group when the primary RLC group is in an inactive state, and the secondary RLC group is in an active state.

10. The method according to any one of claims 1 to 9, wherein when one RLC entity in the primary RLC group is in the active state, the primary RLC group is in the active state; or when all RLC entities in the primary RLC group are in the inactive state, the primary RLC group is in the inactive state; and
when one RLC entity in the secondary RLC group is in the active state, the secondary RLC group is in the active state; or when all RLC entities in the secondary RLC group are in the inactive state, the secondary RLC group is in the inactive state.

11. A communication method, comprising:
generating, by a network device, first configuration information and second configuration information, wherein the first configuration information is used to configure a primary radio link control RLC group, the second configuration information is used to configure a secondary RLC group, the primary RLC group comprises at least one RLC entity, and the secondary RLC group comprises at least one RLC entity; and
sending, by the network device, the first configuration information and the second configuration information to a terminal device.

12. The method according to claim 11, wherein the first configuration information comprises a first indication information element, and the first indication information element indicates an RLC entity that belongs to the primary RLC group and that is in RLC entities associated with a packet data convergence protocol PDCP entity; and the second configuration information comprises a second indication information element, and the second indication information element indicates an RLC entity that belongs to the secondary RLC group and that is in the RLC entities associated with the PDCP entity.

13. The method according to claim 11 or 12, wherein the primary RLC group and the secondary RLC group are associated with a PDCP entity of a same radio bearer.

14. The method according to any one of claims 11 to 13, wherein the first configuration information comprises a third indication information element, and the third indication information element indicates a primary RLC entity in the primary RLC group; and the second configuration information comprises a fourth indication information element, and the fourth indication information element indicates a primary RLC entity in the secondary RLC group.

15. The method according to any one of claims 11 to 14, wherein the first configuration information further comprises a fifth indication information element, and the fifth indication information element indicates an initial status of the RLC entity that belongs to the primary RLC group and that is in the RLC entities associated with the PDCP entity; and the second configuration information comprises a sixth indication information element, and the sixth indication information element indicates an initial status of the RLC entity that belongs to the secondary RLC group and that is in the RLC entities associated with the PDCP entity.

16. An apparatus, comprising units configured to perform steps of the method according to any one of claims 1 to 10, or units configured to perform steps of the method according to any one of claims 11 to 15.

17. An apparatus, comprising at least one processor and an interface circuit, wherein the at least one processor is configured to: communicate with another apparatus through the interface circuit and perform the method according to any one of claims 1 to 10, or perform the method according to any one of claims 11 to 15.

18. An apparatus, comprising a processor, configured to invoke a program stored in a memory to perform the method according to any one of claims 1 to 10 or perform the method according to any one of claims 11 to 15.

19. A computer-readable storage medium, comprising a program, wherein when the program is run by a processor, the method according to any one of claims 1 to 10 is performed, or the method according to any one of claims 11 to 15 is performed.
